# EUROPÄISCHE PATENTANMELDUNG

(11) **EP 4 653 656 A1**
(43) Veröffentlichungstag der Anmeldung: **26.11.2025**
(21) Anmeldenummer: 25177418.8
(22) Anmeldetag: 19.05.2025
(51) Int. Cl.: E06B 3/663, E06B 3/673

(54) **VERFAHREN ZUM ZUSAMMENBAUEN EINER ISOLIERGLASSCHEIBE MIT ZWEI AUSSENGLÄSERN UND WENIGSTENS EINEM DAZWISCHEN LIEGENDEN DÜNNGLAS**

(30) Priorität: 24.05.2024 DE 102024114620
(71) Anmelder: Glaston Germany GmbH, 75242 Neuhausen-Hamberg (DE)
(72) Erfinder: Wolter, Ralf, 75233 Tiefenbronn (DE)
(74) Vertreter: Twelmeier Mommer & Partner

(57) **Zusammenfassung**

Beschrieben wird ein Verfahren zum Zusammenbauen einer zwei Außengläser (S1, S2) und wenigstens ein dazwischen liegendes Dünnglas (T; T1, T2) enthaltenden Isolierglasscheibe (10; 11) mit folgenden Schritten: ein erster flexibler Abstandhalterstrang (14) wird in einer Auftragestation (4) zur Bildung eines ersten rahmenförmigen Abstandhalters auf ein erstes Außenglas (S1) aufgetragen; nach dem Auftragen des ersten Abstandhalterstrangs (14) wird das erste Außenglas (S1) mit einem Dünnglas (T; T1) in einer ersten Pressstation (5) zu einer Glasbaugruppe (U; U1) zusammengefügt; nach dem Zusammenfügen der Glasbaugruppe (U; U1) wird ein zweiter flexibler Abstandhalterstrang (15) zur Bildung eines rahmenförmigen Abstandhalters auf das Dünnglas (T; T1) der Glasbaugruppe (U; U1) aufgetragen; nach dem Auftragen des zweiten Abstandhalterstrangs (15) wird die Glasbaugruppe (U; U1) in einer zweiten Pressstation (8) wenigstens mit einem zweiten Außenglas (S2) zu einer Dreifach- oder einer Vierfach-Isolierglasscheibe (10; 11) vervollständigt.

## Beschreibung

Die Erfindung geht von einem Verfahren und einer Vorrichtung zum Zusammenbauen einer Dreifach-Isolierglasscheibe aus. Dreifach-Isolierglasscheiben werden industriell in großer Stückzahl in Fertigungslinien hergestellt, wobei eine erste, eine zweite und eine dritte Glastafel nacheinander einer Vorrichtung mit einer Auftragestation und einer der Auftragestation nachgeordneten Pressstation zugeführt werden. Jede der Stationen hat einen Waagerechtförderer, auf dem die Glastafeln aufrecht stehend hintereinander transportiert werden. Jedem Waagerechtförderer ist eine Stützwand zugeordnet, an welcher sich die stehenden Glastafeln um einige Grad nach hinten geneigt abstützen. Die erste und dritte Glastafel bilden jeweils ein Außenglas der fertigen Isolierglasscheibe. Die zweite Glastafel bildet bei der fertigen Isolierglasscheibe das Mittelglas. In der Auftragestation wird auf die zweite und dritte Glastafel jeweils ein flexibler Abstandhalterstrang aufgetragen. In der Pressstation werden die drei Glastafeln zu einer Dreifach-Isolierglasscheibe zusammengebaut und gegebenenfalls mit einem von Luft verschiedenen Gas gefüllt.

Aus der WO 2020/028056 A1 sind Dreifach-Isolierglasscheiben bekannt, bei denen das Mittelglas durch ein Dünnglas gebildet wird. Die Isolierglasscheibe weist ein Dünnglas mit einer Dicke von 0,5 mm zwischen zwei Außengläsern mit einer Dicke von jeweils 5 mm auf. Das Dünnglas ist dementsprechend instabil. Es verbiegt sich und kann sehr leicht brechen. Isolierglasscheiben mit Dünnglas, welches eine Dicke von 2 mm oder weniger aufweist, wurden deshalb bisher unter Verwendung von starren, vorgefertigten Abstandhalterrahmen hergestellt. Der Aufwand für das Zusammenbauen von solchen Isolierglasscheiben ist deshalb bislang sehr hoch.

Aus der WO 2021/126607 A1 ist ein Verfahren zum Zusammenbauen einer Dreifach-Isolierglasscheibe mit einem innenliegenden Dünnglas bekannt, bei welchem ein starrer Abstandhalterrahmen mit den erforderlichen Abmessungen vorgefertigt und auf das Dünnglas aufgeklebt wird. Anschließend wird das aufrecht stehende Dünnglas in einer Pressstation mit einem Außenglas zusammengefügt.

Aus der US 2024/0167325 A1 ist ein Verfahren zum Zusammenbauen einer horizontal liegenden Dreifach- oder Vierfach-Isolierglasscheibe mit zumindest einem innenliegenden Dünnglas bekannt, bei welchem auf einem horizontal liegenden Außenglas ein Stapel aus den weiteren Komponenten errichtet wird. Dabei werden vorgefertigte starre Abstandhalterrahmen und Glastafeln als Stapel übereinander gelegt. Zwischen den Abstandhalterrahmen und den Glastafeln wird ein Versiegelungsmittel aufgebracht. Der gesamte Stapel wird anschließend horizontal liegend in eine Ofenpresse gefördert, dort erhitzt und gemeinsam verpresst.

Der Erfindung liegt die Aufgabe zugrunde, ein Verfahren zum Zusammenbauen einer zwei Außengläser und wenigstens ein dazwischen liegendes Dünnglas enthaltenden Isolierglasscheibe zu schaffen, bei dem insbesondere der Aufwand und/oder die Zeit für die Herstellung einer solchen Isolierglasscheibe verringert ist.

Die Aufgabe der Erfindung wird durch ein Verfahren mit den Merkmalen des Anspruchs 1 gelöst. Vorteilhafte Weiterbildungen sind Gegenstand von Unteransprüchen.

Bei dem erfindungsgemäßen Verfahren wird ein erster flexibler Abstandhalterstrang zur Bildung eines ersten rahmenförmigen Abstandhalters auf ein erstes Außenglas aufgetragen. Das Verfahren zum Zusammenbauen der Isolierglasscheiben wird mit einer Vorrichtung durchgeführt, welche mehrere hintereinander angeordnete Stationen enthält. Das erfindungsgemäße Verfahren wird wenigstens mit einer Auftragestation, einer ersten Pressstation und einer zweiten Pressstation durchgeführt. Die erste Pressstation ist der Auftragestation nachgeordnet. Die zweite Pressstation ist der ersten Pressstation nachgeordnet. Der erste flexible Abstandhalterstrang wird in der Auftragestation auf das erste Außenglas aufgetragen. Der erste Abstandhalterstrang kann einen rahmenförmigen Abstandhalter auf dem ersten Außenglas bilden. Nach dem Auftragen des ersten Abstandhalterstrangs wird das erste Außenglas mit einem Dünnglas zu einer Glasbaugruppe zusammengefügt. Das Zusammenfügen des ersten Außenglases mit dem Dünnglas zu der Glasbaugruppe erfolgt in der ersten Pressstation. Beim Zusammenfügen kann der Abstand des Dünnglases zu dem ersten Außenglas verringert werden, bis das Dünnglas auf dem ersten Abstandhalterstrang aufliegt und einen vordefinierten Abstand zu dem ersten Außenglas aufweist. Insbesondere kann der Abstand des Dünnglases zu dem ersten Außenglas quer zur Glasebene verringert werden, insbesondere unter Beibehaltung der Parallelität von Dünnglas und erstem Außenglas. Nach dem Zusammenfügen der Glasbaugruppe wird ein zweiter flexibler Abstandhalterstrang zur Bildung eines rahmenförmigen Abstandhalters auf das Dünnglas der Glasbaugruppe aufgetragen. Insbesondere kann der zweite Abstandhalterstrang einen rahmenförmigen Abstandhalter auf dem Dünnglas bilden. Nach dem Auftragen des zweiten Abstandhalterstrangs wird die Glasbaugruppe wenigstens mit einem zweiten Außenglas zu einer Dreifach- oder Vierfach-Isolierglasscheibe vervollständigt. Das Vervollständigen der Glasbaugruppe zu einer Dreifach- oder Vierfach-Isolierglasscheibe erfolgt in der zweiten Pressstation.

Das Dünnglas ist eine Glastafel mit einer Dicke von 2 mm oder weniger. Das Dünnglas bildet ein Mittelglas oder Innenglas in der fertigen Isolierglasscheibe. Ein Außenglas ist eine Glastafel mit zwei sich gegenüberliegenden Oberflächen, von denen eine erste Oberfläche in der fertigen Isolierglasscheibe dem Dünnglas zugewandt ist und eine zweite Oberfläche an der fertigen Glasscheibe nach außen weist. Die erste Oberfläche des Außenglases bildet somit eine Innenseite innerhalb der fertigen Glasscheibe. Die zweite Oberfläche des Außenglases bildet somit eine Außenseite der fertigen Isolierglasscheibe. Die Dicke eines Außenglases kann über 2 mm bis 15 mm betragen. Sie kann insbesondere im Bereich von 3 mm bis 8 mm liegen.

Die Erfindung hat wesentliche Vorteile:
- Durch die Erfindung wird es im industriellen Maßstab möglich, stehendes Dünnglas mit flexiblen Abstandhaltersträngen zu einer Dreifach- und/oder Vierfach-Isolierglasscheibe zu verarbeiten.
- Durch die Erfindung kann darauf verzichtet werden, auf das alleinstehende Dünnglas einen Abstandhalterstrang aufzubringen.
- Das Applizieren von flexiblen Abstandhaltersträngen auf ein Dünnglas kann erhebliche Probleme bereiten. Beim Auftragen des heißen Materials eines thermoplastischen Abstandhalterstrangs auf ein alleinstehendes Dünnglas würde punktuell eine große Wärmemenge in das Dünnglas eingebracht, welches dadurch sehr stark verformt wird. Es wird derart wellig, dass eine weitere Verarbeitung nicht möglich wäre. Durch die vorliegende Erfindung wird dies vermieden. Ein auf das Außenglas aufgebrachter thermoplastischer Abstandhalterstrang ist beim Zusammenfügen mit dem Dünnglas in der Pressstation schon ausreichend abgekühlt. Außerdem wird die Wärme beim Aufsetzen des Dünnglases auf den fertigen Abstandhalter nicht punktuell in das Dünnglas eingebracht, sondern im Wesentlichen gleichmäßig entlang des gesamten Randes. Hierdurch können unzulässig hohe Verformungen und Welligkeiten des Dünnglases sowie ein unzulässig hoher Verzug und Spannungseintrag in das Dünnglas vermieden werden.
- Ein flexibler Abstandhalterstrang, welcher von einer Vorratsrolle abgezogen und maschinell auf eine Glastafel appliziert wird, steht unter Vorspannung, welche bei einer direkten Applikation auf ein alleinstehendes Dünnglas zu einer unzulässig hohen Krümmung des Dünnglases führen würde.
- Die vorliegende Erfindung ermöglicht, dass flexible Abstandhalterstränge ausschließlich auf ein Außenglas oder auf ein bereits mit einem Außenglas zu einer Glasbaugruppe zusammengefügtes Dünnglas aufgetragen werden. Die die Außengläser bildenden Glastafeln sind aus sich heraus stabil genug, um die bei einer direkten Applikation eines flexiblen Abstandhalterstrangs auf die Glastafel wirkenden Kräfte aufzunehmen. Außengläser können die beim Applizieren des Abstandhalterstrangs in die Glastafel eingebrachten Spannungen aufgrund ihrer großen Eigenstabilität ausreichend gut kompensieren. Wird anschließend ein Außenglas mit dem entlang seines des gesamten Randes aufgebrachten Abstandhalterstrang mit dem Dünnglas zusammengesetzt, dann verursacht dies keine unzulässig hohen Spannungen und/oder Verformungen des Dünnglases mehr.
- Der Erfinder hat überraschend festgestellt, dass ein Dünnglas, welches bereits mit einem Außenglas zu einer Glasbaugruppe zusammengefügt wurde, dadurch ausreichend stabilisiert ist. Durch die Erfindung wird es möglich, einen flexiblen Abstandhalterstrang auf das Dünnglas der Glasbaugruppe aufzutragen, ohne dass unzulässig hohe Spannungen und/oder Verformungen des Dünnglases auftreten.
- Dünnglas enthaltende Isolierglasscheiben lassen sich mit der Erfindung deshalb sehr schnell und mit niedrigen Taktzeiten herstellen. Sie werden dadurch in großer Stückzahl verfügbar. Dünnglas enthaltende Dreifach-Isolierglasscheiben können in gleicher Dicke wie bisherige Zweifach-Isolierglasscheiben hergestellt werden. Alte Isolierglasscheiben können dadurch gegen besser isolierende Dreifach-Isolierglasscheiben ausgetauscht werden, ohne dass an Fensterrahmen bauliche Änderungen erforderlich sind. Dadurch kann die Modernisierung von Gebäuden vereinfacht werden.
- Durch den noch nicht rahmenförmig vormontierten Abstandhalter können einfach und flexibel Glastafeln in Sonderformaten und/oder mit nicht rechteckiger Außenkontur zu Isolierglasscheiben verarbeitet werden.

In weiterer Ausgestaltung kann das Dünnglas und das den ersten Abstandhalterstrang aufweisende Außenglas nacheinander stehend in die erste Pressstation hineingefördert werden, in welcher das Zusammenfügen zu der Glasbaugruppe erfolgt. Das Dünnglas kann dabei auf seiner Unterkante stehend in die Pressstation hineingefördert werden. Das Dünnglas wird unterbrechungsfrei, also ohne anzuhalten und ohne Bearbeitung durch die Auftragestation auf seinem Rand stehend durch die Auftragestation hindurchgefördert. Insbesondere kann die Glasbaugruppe nach dem Auftragen des Abstandhalterstrangs auf das Dünnglas der Glasbaugruppe stehend in die zweite Pressstation hineingefördert werden.

In weiterer Ausgestaltung kann das sich an einer ersten Pressplatte abstützende Dünnglas in der Pressstation an die zweite Pressplatte angesaugt werden. Hierzu kann die Pressstation eine Ansaugeinrichtung zum Ansaugen des Dünnglases an die zweite Pressplatte aufweisen. Danach wird die zweite Pressplatte mit dem daran angesaugten Dünnglas von der ersten Pressplatte wegbewegt. Dies geschieht, indem der Abstand der beiden Pressplatten zueinander vergrößert wird. Das erste Außenglas wird in die Pressstation hineingefördert, wobei es sich an der ersten Pressplatte abstützt. Das erste Außenglas kann in der Pressstation deckungsgleich oder konzentrisch zu dem an die zweite Pressplatte angesaugten Dünnglas positioniert werden. Nach dem Zusammenfügen des Dünnglases mit dem ersten Außenglas wird das Ansaugen des Dünnglases an die zweite Pressplatte beendet. Die Kantenlänge des Dünnglases kann einige Millimeter, beispielsweise 3 mm auf jeder Seite, kleiner als die Kantenlänge des Außenglases sein. In einem solchen Fall kann in der Pressstation das Dünnglas angehoben und/oder das erste Außenglas abgesenkt werden, bis das Dünnglas konzentrisch zum ersten Außenglas positioniert ist. Das Anheben und/oder Absenken kann beispielsweise dadurch erfolgen, dass ein Förderriemen des Waagerechtförderers in der ersten Pressstation um einen entsprechenden Winkel schräg gestellt wird, bevor die auf dem Fördererriemen aufstehende Glastafel an die entsprechende Pressplatte angesaugt wird. Ein Schrägstellen eines Fördererriemen ist an sich bekannt und beispielsweise in der EP 1 769 130 B1 beschrieben. Das erste Außenglas und das kleinere Dünnglas werden so zueinander positioniert, dass der Rand des Dünnglases vollständig innerhalb des Randes des ersten Außenglases liegt. Eine solche Isolierglasscheibe wird auch als "an allen vier Seiten gestufte Scheibe" bezeichnet. Der empfindliche Rand des Dünnglases kann dadurch besser vor Beschädigungen geschützt werden.

In weiterer Ausgestaltung kann in der Pressstation das sich an der ersten Pressplatte abstützende Dünnglas zunächst an die erste Pressplatte angesaugt werden. Die zweite Pressplatte wird an das Dünnglas angelegt, wobei das Ansaugen des Dünnglases an die erste Pressplatte fortgesetzt wird. Das Dünnglas wird an die zweite Pressplatte angesaugt, bevor das Ansaugen des Dünnglases an die erste Pressplatte beendet wird. Das Dünnglas ist also für eine gewisse Zeitspanne zwischen den beiden Pressplatten der ersten Pressstation gehalten und wird dabei von beiden Pressplatten gleichzeitig angesaugt. Dadurch kann eine besonders gute Ebenheit des Dünnglases gewährleistet werden. Ein vollflächiges Ansaugen des Dünnglases kann einen Verzug des Dünnglases beim nachfolgenden Aufsetzen auf einen noch warmen thermoplastischen Abstandhalterstrang vermindern.

In weiterer Ausgestaltung kann eine Dreifach-Isolierglasscheibe insbesondere in folgender Weise hergestellt werden: Vor dem Auftragen des ersten Abstandhalters auf das erste Außenglas werden das zweite Außenglas und das Dünnglas nacheinander stehend durch die Auftragestation hindurch gefördert. Das zweite Außenglas kann unterbrechungsfrei und ohne Bearbeitung durch die erste Pressstation hindurch transportiert werden. Das zweite Außenglas wird stehend bis in die zweite Pressstation hinein gefördert. Dabei kann sich das zweite Außenglas an einer ersten Pressplatte der zweiten Pressstation abstützen. In der zweiten Pressstation kann das zweite Außenglas an eine zweite Pressplatte der zweiten Pressstation angesaugt werden. Die zweite Pressplatte mit dem daran angesaugten zweiten Außenglas kann von der ersten Pressplatte der zweiten Pressstation wegbewegt werden. Dem zweiten Außenglas nachfolgend, wird das Dünnglas stehend bis in die erste Pressstation hineingefördert. Nach dem Auftragen des ersten Abstandhalterstrangs wird das erste Außenglas stehend aus der Auftragestation in die erste Pressstation gefördert. In der ersten Pressstation kann sich bereits das Dünnglas befinden. In der ersten Pressstation wird das Dünnglas und das erste Außenglas zu der Glasbaugruppe zusammengefügt. Zum Auftragen des zweiten Abstandhalterstrangs auf das Dünnglas kann die Glasbaugruppe in die vor der ersten Pressstation angeordnete Auftragestation zurückgefördert werden. Nach dem Auftragen des zweiten Abstandhalterstrangs auf das Dünnglas der Glasbaugruppe wird die Glasbaugruppe stehend in die zweite Pressstation hineingefördert. Nach dem Wegbewegen des zweiten Außenglases von der ersten Pressplatte kann die Glasbaugruppe in die zweite Pressstation hineingefördert werden, wobei sie sich an der ersten Pressplatte der zweiten Pressstation abstützt, insbesondere mit dem ersten Außenglas. In der zweiten Pressstation wird die Glasbaugruppe und das zweite Außenglas zu einer Dreifach-Isolierglasscheibe zusammengefügt. Beim Zusammenfügen können die Glasbaugruppe und das zweite Außenglas parallel zueinander sein. Beim Zusammenfügen kann der Abstand des zweiten Außenglases zu der Glasbaugruppe verringert werden, bis das zweite Außenglas auf dem zweiten Abstandhalterstrang aufliegt und das erste Außenglas einen vordefinierten Abstand zu dem zweiten Außenglas aufweist. Nach dem Zusammenfügen kann das Ansaugen des zweiten Außenglases beendet und die Dreifach-Isolierglasscheibe stehend aus der zweiten Pressstation herausgefördert werden.

In weiterer Ausgestaltung kann eine Vierfach-Isolierglasscheibe insbesondere in folgender Weise hergestellt werden: Ein dritter flexibler Abstandhalterstrang wird zur Bildung eines dritten rahmenförmigen Abstandhalters auf das zweite Außenglas aufgetragen. Vor dem Auftragen des ersten Abstandhalterstrangs und vor dem Auftragen des dritten Abstandhalterstrangs kann das zweite Dünnglas stehend durch die Auftragestation hindurch bis in die erste Pressstation hinein gefördert werden. Dem zweiten Dünnglas nachfolgend kann das zweite Außenglas stehend in die Auftragestation hineingefördert werden. In der Auftragestation kann der dritte flexible Abstandhalterstrang auf das zweite Außenglas aufgetragen werden. Nach dem Auftragen des dritten Abstandhalterstrangs wird das zweite Außenglas mit einem zweiten Dünnglas zu einer zweiten Glasbaugruppe zusammengefügt, insbesondere in der ersten Pressstation. Dazu kann das zweite Außenglas stehend aus der Auftragestation in die erste Pressstation gefördert werden. Insbesondere kann sich dort bereits das zweite Dünnglas befinden. Beim Zusammenfügen kann der Abstand des zweiten Dünnglases zu dem zweiten Außenglas verringert werden, bis das zweite Dünnglas auf dem dritten Abstandhalterstrang aufliegt und einen vordefinierten Abstand zu dem zweiten Außenglas aufweist. Dem zweiten Außenglas nachfolgend kann das erste Dünnglas durch die Auftragestation hindurch gefördert werden. Dem ersten Dünnglas nachfolgend kann das erste Außenglas stehend in die Auftragestation hineingefördert werden. In der Auftragestation kann der erste flexible Abstandhalterstrang auf das erste Außenglas aufgetragen werden. Nach dem Zusammenfügen der zweiten Glasbaugruppe kann diese stehend aus der ersten Pressstation in eine Wendestation gefördert werden. In der Wendestation kann die zweite Glasbaugruppe um eine aufrecht stehende Drehachse gedreht und dadurch gewendet werden. Der zweiten Glasbaugruppe nachfolgend kann das erste Dünnglas stehend in die erste Pressstation hineingefördert werden. Nach dem Wenden kann die zweite Glasbaugruppe stehend aus der Wendestation in die zweite Pressstation gefördert werden. Dabei kann sich die zweite Glasbaugruppe an einer ersten Pressplatte der zweiten Pressstation abstützen, insbesondere mit dem zweiten Dünnglas. In der zweiten Pressstation kann das zweite Außenglas der zweiten Glasbaugruppe an eine zweite Pressplatte der zweiten Pressstation angesaugt werden. In der zweiten Pressstation kann die zweite Pressplatte mit der daran angesaugten zweiten Glasbaugruppe von der ersten Pressplatte wegbewegt werden. Nach dem Auftragen des ersten Abstandhalterstrangs auf das erste Außenglas kann dieses stehend aus der Auftragestation in die erste Pressstation gefördert werden. Insbesondere kann sich dort bereits das erste Dünnglas befinden. In der ersten Pressstation kann das erste Dünnglas und das erste Außenglas zu der ersten Glasbaugruppe zusammengefügt werden. Nach dem Zusammenfügen der ersten Glasbaugruppe kann der zweite flexible Abstandhalterstrang auf das erste Dünnglas der ersten Glasbaugruppe aufgetragen werden. Zum Auftragen des zweiten Abstandhalterstrangs auf das erste Dünnglas kann die erste Glasbaugruppe in die vor der ersten Pressstation angeordnete Auftragestation zurückgefördert werden. Nach dem Auftragen des zweiten Abstandhalterstrangs auf das erste Dünnglas der ersten Glasbaugruppe kann die erste Glasbaugruppe stehend in die zweite Pressstation hineingefördert werden. Die erste Glasbaugruppe kann sich dabei an der ersten Pressplatte der zweiten Pressstation abstützen, insbesondere mit dem ersten Außenglas. Insbesondere kann sich dort bereits die zweite Glasbaugruppe befinden, welche von der ersten Pressplatte der zweiten Pressstation wegbewegt wurde. Die erste Glasbaugruppe kann insbesondere ohne Wenden durch die Wendestation hindurchgefördert werden. Die erste Glasbaugruppe mit dem darauf aufgetragenen zweiten Abstandhalterstrang und die vorab zusammengebaute zweite Glasbaugruppe werden in der zweiten Pressstation zu einer Vierfach-Isolierglasscheibe zusammengefügt. Insbesondere wird dabei der Abstand der ersten Glasbaugruppe zu der zweiten Glasbaugruppe verringert, bis das zweite Dünnglas der zweiten Glasbaugruppe auf dem zweiten Abstandhalterstrang aufliegt und das erste Außenglas einen vordefinierten Abstand zu dem zweiten Außenglas aufweist. Nach dem Zusammenfügen der ersten Glasbaugruppe mit der zweiten Glasbaugruppe kann das Ansaugen des zweiten Außenglases an die zweite Pressplatte der zweiten Pressstation beendet werden. Nach dem Zusammenfügen bzw. nach dem Beenden des Ansaugens des zweiten Außenglases kann die Vierfach-Isolierglasscheibe stehend aus der zweiten Pressstation herausgefördert werden.

In weiterer Ausgestaltung kann das erfindungsgemäße Verfahren mit einer ersten Auftragestation und einer zweiten Auftragestation durchgeführt werden. Die erste Pressstation ist der ersten Auftragestation nachgeordnet. Die zweite Auftragestation ist zwischen der ersten Pressstation und der zweiten Pressstation, insbesondere zwischen einer Wendestation und der zweiten Pressstation, angeordnet. Das Auftragen des ersten Abstandhalterstrangs auf das erste Außenglas wird in der ersten Auftragestation durchgeführt. Beim Zusammenbauen einer Dreifach-Isolierglasscheibe kann die Glasbaugruppe zum Auftragen des zweiten Abstandhalterstrangs auf das Dünnglas der Glasbaugruppe in die zweite Auftragestation hineingefördert werden. Beim Zusammenbauen einer Vierfach-Isolierglasscheibe kann das Auftragen des dritten Abstandhalterstrangs auf das zweite Außenglas in der ersten Auftragestation durchgeführt werden. Beim Zusammenbauen einer Vierfach-Isolierglasscheibe kann die erste Glasbaugruppe zum Auftragen des zweiten Abstandhalterstrangs auf das erste Dünnglas der ersten Glasbaugruppe in die zweite Auftragestation hineingefördert werden. Durch die Verwendung von zwei Auftragestationen kann gewährleistet werden, dass die Glastafeln bzw. die Glasbaugruppen nur in Hauptförderrichtung durch die Fertigungslinie transportiert werden. Ein Rücktransport in eine vorgeordnete Station kann vermieden und die Herstellungszeit weiter verkürzt werden.

Eine Wendestation kann nachfolgend der ersten Pressstation angeordnet sein. Die Wendestation hat zwei parallele Stützwände und einen Waagerechtförderer. Der Waagerechtförderer ist mit den beiden Stützwänden gemeinsam um eine aufrechte Drehachse drehbar. Die Wendestation ist eingerichtet, eine auf dem Waagerechtförderer stehende Glasbaugruppe 180° um eine aufrecht stehende Drehachse zu wenden. Die Drehachse ist entlang der Förderrichtung gesehen mittig in Bezug auf den Waagerechtförderer angeordnet. Dadurch steht der Waagerechtförderer nach einer Drehung um 180° wieder in derselben Linie wie vor der Drehung. Eine zweite Pressstation ist nachfolgend der Wendestation angeordnet. Sowohl die Wendestation als auch die beiden Pressstationen, insbesondere alle Stationen der erfindungsgemäßen Vorrichtung, können jeweils nur einen einzigen einspurigen Waagerechtförderer enthalten. Mit "einspurig" wird ein Waagerechtförderer bezeichnet, welcher nur eine Förderbahn aufweist. Der Waagerechtförderer kann zum geradlinigen Fördern stehender Glastafeln durch die jeweilige Station hindurch eingerichtet sein. Alle Waagerechtförderer können entlang einer geraden Linie hintereinander angeordnet sein.

Sowohl die erste Pressstation als auch die zweite Pressstation können wie folgt ausgebildet sein. Die Pressstation hat zwei parallele Pressplatten. Eine erste der beiden Pressplatten bildet eine aufrechte Stützwand für eine stehend auf einem Waagerechtförderer transportierte Glastafel. Mit der Eigenschaft "aufrecht" ist gemeint, dass die Stützwand nicht exakt vertikal bzw. lotrecht steht, sondern um einige Grad nach hinten geneigt ist, damit eine aufrecht stehende und sich an die Stützwand anlehnende Glastafel nicht nach vorne, also von der Stützwand weg, umkippt. Eine Stützwand kann eine Neigung von etwa 6° bis 8° zur Vertikalen aufweisen. Eine zweite der beiden Pressplatten kann quer zu der ersten Pressplatte verschiebbar sein, um den Abstand der beiden Pressplatten zueinander zu verändern. Bei der Verschiebung der zweiten Pressplatte kann die Parallelität der zweiten Pressplatte zu der ersten Pressplatte erhalten bleiben. Die Pressstation kann eine Ansaugeinrichtung zum Ansaugen einer Glastafel an die zweite Pressplatte aufweisen. Die Pressstation kann eingerichtet sein, den Zwischenraum zwischen den Glastafeln mit einem von Luft verschiedenen Gas zu füllen. Der Aufbau und die Funktionsweise derartiger Pressstationen ist durch jahrzehntelangen Einsatz bei der industriellen Herstellung von Isolierglasscheiben sowie aus EP 0 539 407 B1 und EP 1 769 130 B1 an sich bekannt und braucht deshalb nicht näher beschrieben zu werden.

In der Auftragestation wird in an sich bekannter Weise auf eine aufrechte Glastafel entlang ihres Randes ein flexibler Abstandhalterstrang aufgetragen. Es wird also kein vormontierter Abstandhalterrahmen auf die Glastafel aufgesetzt. Der Abstandhalterstrang kann lückenlos entlang des Randes der Glastafel aufgetragen werden. Erst durch einen entlang des gesamten Randes der Glastafel aufgetragenen Abstandhalterstrang wird ein Abstandhalterrahmen gebildet, um zwei benachbarte Glastafeln auf Abstand zu halten. Der flexible Abstandhalterstrang kann ein pastöser und sich sodann verfestigender Abstandhalterstrang aus einem thermoplastischen Material und/oder einem reaktiv vernetzenden Material sein, welches mithilfe einer Düse auf die Glastafel appliziert wird. Der flexible Abstandhalterstrang ist somit nach dem Applizieren noch heiß und/oder noch nicht vollständig ausgehärtet. Der flexible Abstandhalterstrang kann ferner als bandförmiges Material von einer Vorratsrolle abgerollt und auf die Glastafel appliziert werden. Die Auftragestation kann einen Applikationskopf enthalten, welcher wenigstens an einem Abschnitt des Randes des Außenglases entlanggeführt wird, um den Abstandhalterstrang zu applizieren. Die Auftragestation ist zum Auftragen eines flexiblen Abstandhalterstrangs entlang eines Randes eines Dünnglases einer stehenden Glasbaugruppe eingerichtet.

In weiterer Ausgestaltung kann eine der Stationen eine Luftkissenstützwand mit einer ebenen Stützfläche aufweisen. Die Stützwand ist zum Abstützen einer stehend auf dem Waagerechtförderer transportierten Glastafel eingerichtet. Eine Vielzahl von Luftkanälen kann in die Stützfläche münden. Aus den Luftkanälen tritt bei Beaufschlagung mit Überdruck ein Luftstrom schräg zur Stützfläche aus. Dadurch entsteht auf der Stützfläche ein Luftkissen, auf welchem die transportierte Glastafel, insbesondere das Dünnglas, sich abstützen und gleiten kann, ohne die Stützfläche zu berühren. Es wird eine schräg nach oben gerichtete Blassströmung an der Stützwand erzeugt. Ein vor der Station stehender Maschinenbediener wird dadurch nicht direkt angeblasen. Zumindest einer der Luftkanäle, insbesondere jeder der Luftkanäle, kann einen Endkanalabschnitt enthalten, welcher schräg zur Stützfläche verläuft. Der Endkanalabschnitt kann in einem Vertikalschnitt durch die Stützwand in einem Winkel von 45° oder weniger, insbesondere von 30° bis 45°, zur Stützfläche verlaufen. Durch eine derart schräge Blasströmung kann ein Luftpolster erzeugt werden, welches den Transport von Dünnglas wesentlich erleichtert. Insbesondere die erste Pressstation kann eine derartige Luftkissenstützwand enthalten. Die Luftkissenstützwand kann durch die erste Pressplatte gebildet werden. Zwischen der Auftragestation und der ersten Pressstation kann eine Zwischenstation angeordnet sein, welche einen Waagerechtförderer und eine erfindungsgemäße Luftkissenstützwand enthält.

Wenigstens eine der Pressplatten, insbesondere die erste Pressplatte der ersten Pressstation, kann eine ebene Stützfläche aufweisen, in welcher eine Vielzahl von Luftkanälen mündet, wobei die Luftkanäle bei Beaufschlagung mit Unterdruck Ansaugeinrichtungen bilden, um ein Dünnglas eben an die Stützfläche anzusaugen. Die Luftkanäle in der Pressplatte können wahlweise mit Unterdruck oder mit Überdruck beaufschlagbar sein. Dadurch können die Funktionen einer Ansaugeinrichtung und einer Luftkissenstützwand in der Pressplatte kombiniert werden. Eine Pressplatte kann dadurch wahlweise als Luftkissenstützwand für den Transport wirken oder eine Glastafel ansaugen, um sie beim Zusammenbauen zu fixieren.

Die Stützfläche kann zumindest eine Vertiefung aufweisen, welche mit einem Endkanalabschnitt des Luftkanals in Verbindung steht. Die Vertiefung kann kreisförmig sein, insbesondere mit einem Durchmesser von 20 mm oder weniger. Es kann eine Vertiefung für jeden Endkanalabschnitt vorgesehen sein. Die Vertiefung kann den Endkanalabschnitt umgeben. Die Vertiefung ist zur Stützfläche hin offen. Die Stützfläche kann zumindest eine Nut aufweisen, welche mit einem Endkanalabschnitt in Verbindung steht. Die Nut kann insbesondere von einer den Endkanalabschnitt umgebenden Vertiefung ausgehen. Die Nut verläuft entlang der Stützfläche und ist zur Stützfläche hin offen. Der Endkanalabschnitt kann schräg in die Vertiefung oder die Nut münden. Alle Endkanalabschnitte können parallel zueinander verlaufen.

Bei der Verarbeitung von Dünnglas mit einer Dicke von 2 mm oder weniger beträgt die Breite der Nut 20 mm oder weniger. Bei der Verarbeitung von Dünnglas mit einer Dicke von 1,5 mm oder weniger kann die Breite der Nut insbesondere 15 mm oder weniger betragen. Bei der Verarbeitung von Dünnglas mit einer Dicke von 1 mm oder weniger kann die Breite der Nut insbesondere 10 mm oder weniger betragen. Hierdurch kann sichergestellt werden, dass sich das ohne Unterstützung über die Nut erstreckende Dünnglas durch den im Luftkanal herrschenden Unterdruck nicht unzulässig verformt. Das Dünnglas kann dadurch in besonders guter Weise eben und ohne unerwünschte Welligkeit an die Stützfläche angesaugt werden.

Die Nut kann wenigstens zwei schräg zueinander verlaufende Nutabschnitte enthalten. Beide Nutabschnitte verlaufen jeweils geradlinig. Jeder der Nutabschnitte kann eine Länge von 60 mm oder weniger aufweisen. Dadurch kann besonders gut verhindert werden, dass sich das Dünnglas durch den Unterdruck elastisch verformt und in die Nut hineinwölbt. In der Stützfläche können mehrere Nuten angeordnet sein, die mit einem Endkanalabschnitt in Verbindung stehen. In einer Draufsicht auf die Stützfläche können mehrere Nuten radial auf den einen Endkanalabschnitt zu laufen. Die Nuten können beispielsweise strahlenförmig um den einen Endkanalabschnitt herum angeordnet sein.

In weiterer Ausgestaltung kann die Stützfläche einen ersten Stützbereich und einen zweiten Stützbereich aufweisen. Eine Luftkanaldichte in dem ersten Stützbereich kann größer als in dem zweiten Stützbereich der Stützfläche sein. Die Luftkanaldichte in einem Stützbereich ist definiert als Anzahl von Luftkanälen, die in diesen Stützbereich münden, dividiert durch die Gesamtfläche dieses Stützbereichs. Der erste Stützbereich kann sich entlang des Randes im unteren Bereich der Stützwand erstrecken. Bei Beaufschlagung mit Überdruck tritt im ersten Stützbereich mehr Luft aus. Es kann zuverlässig verhindert werden, dass das Dünnglas beim Transport auf dem Waagerechtförderer mit seiner Unterkante an der Stützfläche anschlägt. Ein von den Luftkanälen besaugter Flächenanteil in dem ersten Stützbereich kann größer sein als in dem zweiten Stützbereich, insbesondere indem die mit Unterdruck beaufschlagte Fläche durch Vertiefungen und/oder Nuten vergrößert ist. Der besaugte Flächenanteil in einem Stützbereich ist die mit Unterdruck beaufschlagte Fläche dividiert durch die Gesamtfläche dieses Stützbereichs. Das Dünnglas kann dadurch in besonders ebener Weise an die Stützfläche angesaugt werden.

Weitere Einzelheiten und Vorteile der Erfindung werden an Ausführungsbeispielen der Erfindung unter Bezugnahme auf die beigefügten Zeichnungen erläutert. Gleiche und einander entsprechende Komponenten sind darin mit übereinstimmenden Bezugszeichen versehen. Es zeigen:
- Figur 1: eine schematische Draufsicht eines Aufbaus einer Vorrichtung sowie einige Zwischenschritte bei einem ersten Ausführungsbeispiel eines erfindungsgemäßen Verfahrens zum Zusammenbauen einer Vierfach-Isolierglasscheibe,
- Figur 2: die Vorrichtung der Figur 1 mit weiteren Zwischenschritten beim Zusammenbauen der Vierfach-Isolierglasscheibe,
- Figur 3: eine schematische Seitenansicht einer fertigen Dreifach-Isolierglasscheibe,
- Figur 4: eine schematische Seitenansicht einer fertigen Vierfach-Isolierglasscheibe,
- Figur 5: eine schematische Frontansicht einer Wendestation für die Vorrichtung der Figur 1,
- Figur 6: eine schematische Draufsicht auf die Wendestation der Figur 5,
- Figur 7: eine schematische Seitenansicht der Wendestation der Figur 5,
- Figur 8: eine schematische Frontansicht einer Stützwand für die Vorrichtung der Figur 1,
- Figur 9: eine vergrößerte Darstellung eines Bereichs X der Figur 8,
- Figur 10: eine vergrößerte Darstellung eines Vertikalschnitts durch die Stützwand im Bereich X,
- Figur 11: die Vorrichtung der Figur 1 sowie einige Zwischenschritten bei einem Ausführungsbeispiel eines erfindungsgemäßen Verfahrens zum Zusammenbauen einer Dreifach-Isolierglasscheibe,
- Figur 12: die Vorrichtung der Figur 11 mit weiteren Zwischenschritten beim Zusammenbauen der Dreifach-Isolierglasscheibe,
- Figur 13: eine Variante einer Vorrichtung ähnlich Figur 1 sowie einige Zwischenschritten bei einem weiteren Ausführungsbeispiel eines erfindungsgemäßen Verfahrens zum Zusammenbauen einer Vierfach-Isolierglasscheibe,
- Figur 14: die Vorrichtung der Figur 13 mit weiteren Zwischenschritten beim Zusammenbauen der Vierfach-Isolierglasscheibe,
- Figur 15: eine Variante einer Vorrichtung ähnlich Figur 1 sowie Zwischenschritte bei einem weiteren Ausführungsbeispiel eines erfindungsgemäßen Verfahrens zum Zusammenbauen einer Dreifach-Isolierglasscheibe.

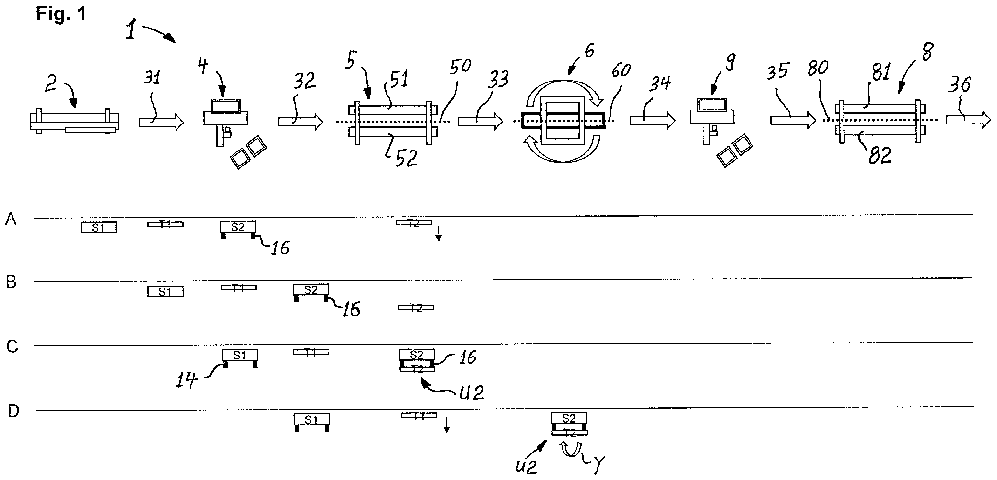

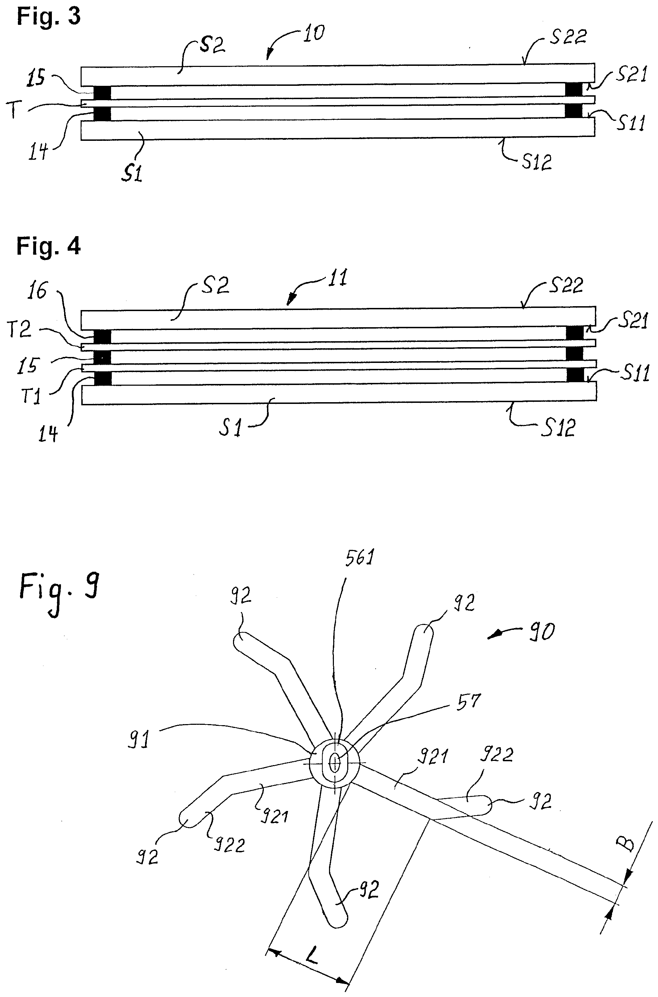

In den Figuren 1, 2 und 11, 12 ist jeweils eine Vorrichtung 1 zum Zusammenbauen von Isolierglasscheiben 10, 11 dargestellt, welche als einspurige Fertigungslinie ausgebildet ist. Eine Dreifach-Isolierglasscheibe 10 enthält drei Glastafeln S1, T und S2, siehe Figur 3. Eine Vierfach-Isolierglasscheibe 11 enthält vier Glastafeln S1, T1, T2 und S2, siehe Figur 4. Bei den Glastafeln T sowie T1 und T2 handelt es sich jeweils um ein Dünnglas mit einer Dicke von 1 mm oder weniger. Die Glastafel S1 ist ein erstes Außenglas mit einer ersten Oberfläche S11, welche dem Dünnglas T bzw. T1 zugewandt ist und eine Innenseite der Isolierglasscheibe 10 oder 11 bildet. Eine zweite Oberfläche S12 des Außenglases S1 bildet eine Außenseite der Isolierglasscheibe 10 oder 11. Die Glastafel S2 ist ein zweites Außenglas, welches eine erste Oberfläche S21 und eine zweite Oberfläche S22 aufweist, die entsprechend eine Innenseite bzw. eine Außenseite der Isolierglasscheibe 10 oder 11 bilden. Bei der Isolierglasscheibe 10 ist ein erster flexibler Abstandhalterstrang 14 zwischen dem ersten Außenglas S1 und dem Dünnglas T angeordnet. Der Abstandhalterstrang 14 bildet einen an sich bekannten Abstandhalterrahmen entlang des Randes des Außenglases S1, welcher die beiden Glastafeln S1 und T in einem vordefinierten Abstand zueinander hält. Entsprechend ist zwischen dem zweiten Außenglas S2 und dem Dünnglas T ein zweiter flexibler Abstandhalterstrang 15 angeordnet. Bei der Isolierglasscheibe 11 ist ein erster flexibler Abstandhalterstrang 14 zwischen dem ersten Außenglas S1 und dem ersten Dünnglas T1 angeordnet. Ein zweiter flexibler Abstandhalterstrang 15 ist zwischen dem ersten Dünnglas T1 und dem zweiten Dünnglas T2 angeordnet. Ein dritter flexibler Abstandhalterstrang 16 ist in entsprechender Weise zwischen dem zweiten Außenglas S2 und dem zweiten Dünnglas T2 angeordnet.

Die Vorrichtung 1 enthält eine Visitierstation 2, mehrere Zwischenstationen, zwei Auftragestationen 4 und 9, zwei Pressstationen 5 und 8 sowie eine Wendestation 6. Die Zwischenstationen 31, 32, 33, 34 und 35 sind zwischen den anderen Stationen als Transportstrecke und/oder Zwischenspeicher vorgesehen. Die Zwischenstation 36 ist der zweiten Pressstation 8 zum Abtransport der fertigen Isolierglasscheibe 10, 11 nachgeordnet. Die Zwischenstationen 31, 32, 33, 34, 35 und 36 können jeweils in an sich bekannter Weise einen einspurigen Waagerechtförderer und eine Stützwand (beides nicht dargestellt) enthalten.

Bei einem ersten Ausführungsbeispiel der erfindungsgemäßen Herstellung der Vierfach-Isolierglasscheibe 11 wird der Visitierstation 2 das zweite Dünnglas T2 als erste Glastafel zugeführt und dort auf Fehlerfreiheit kontrolliert. Anschließend wird das Dünnglas T2 in Hauptförderrichtung stehend durch die Zwischenstation 31, die erste Auftragestation 4 und die Zwischenstation 32 hindurch zur ersten Pressstation 5 gefördert. Das zweite Außenglas S2 wird als zweite Glastafel zugeführt. Das Außenglas S2 wird nach Kontrolle auf Fehlerfreiheit in der Visitierstation 2 über die Zwischenstation 31 in die erste Auftragestation 4 gefördert. Das erste Dünnglas T1 wird der Visitierstation 2 als dritte Glastafel zugeführt. Das Dünnglas T1 wird nach Kontrolle auf Fehlerfreiheit in die Zwischenstation 31 gefördert. Dann wird das erste Außenglas S1 als vierte Glastafel in die Visitierstation 2 hineingefördert und dort auf Fehlerfreiheit kontrolliert. In der ersten Auftragestation 4 wird der dritte Abstandhalterstrang 16 auf das Außenglas S2 aufgetragen, sodass in an sich bekannter Weise ein geschlossener Abstandhalterrahmen entlang des Randes des Außenglases S2 gebildet wird, vgl. Zwischenschritt A in Figur 1.

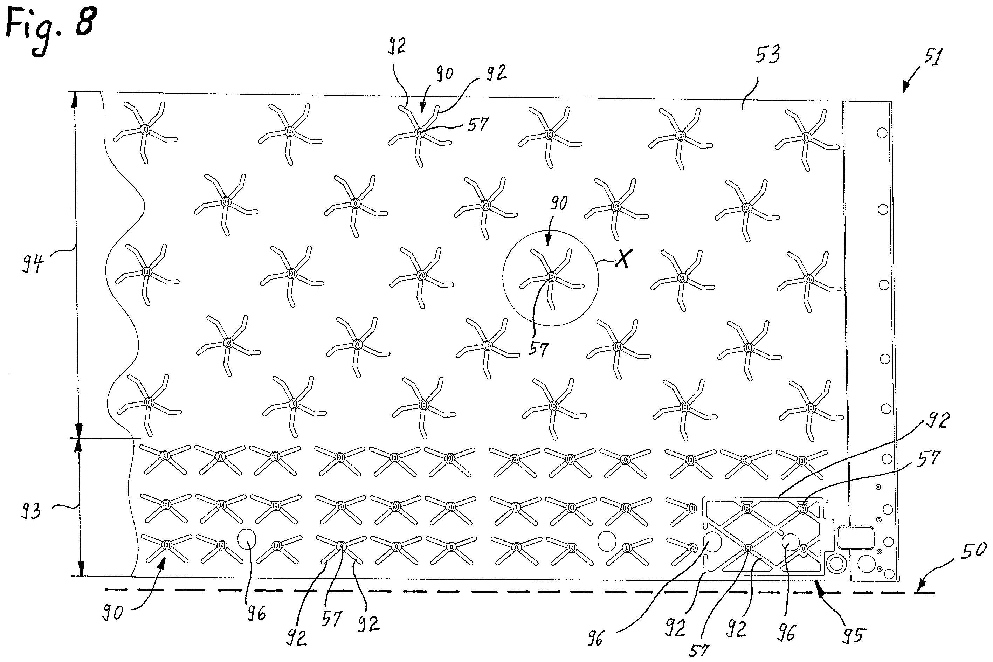

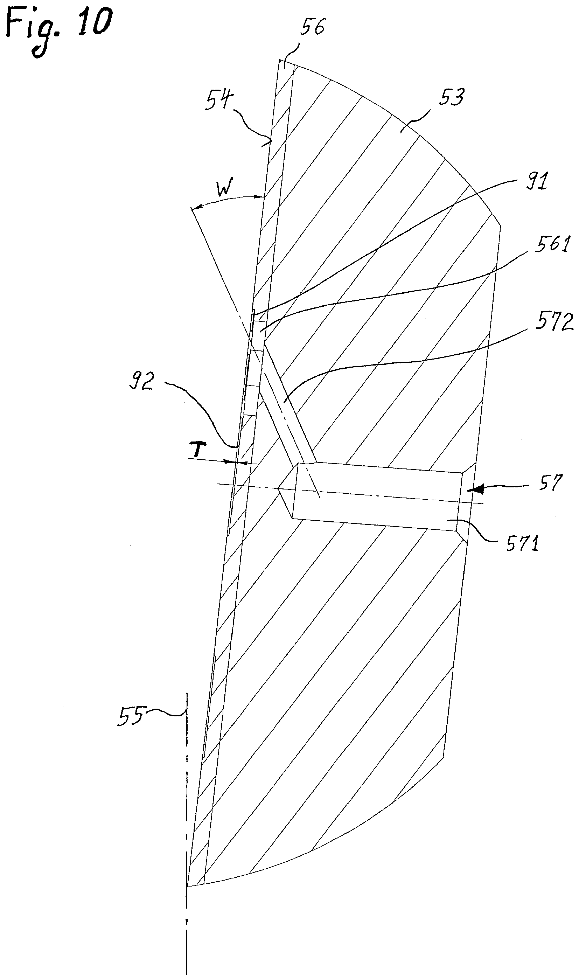

Die erste Pressstation 5 hat einen einspurigen Waagerechtförderer 50, eine erste Pressplatte 51 und eine zweite Pressplatte 52. Der Waagerechtförderer 50 ist in an sich bekannter Weise ausgestaltet und schematisch durch eine gestrichelte Linie angedeutet. Die erste Pressplatte 51 ist ortsfest angeordnet. Die aufrecht stehende Pressplatte 51 ist gegenüber der Vertikalen leicht nach hinten geneigt und stützt das auf dem Waagerechtförderer 50 stehende Dünnglas T2 ab, sodass es nicht nach vorne, d. h. zu der der Pressplatte 51 abgewandten Seite, umkippt. Die Pressplatte 51 bildet eine Stützwand 53 mit einer ebenen Stützfläche 54. Die Vertikale bzw. Lotrechte ist in Figur 10 als strichpunktierte Linie 55 angedeutet. Die Stützfläche 54 wird von einem Gummibelag 56 auf der Stützwand 53 gebildet. Die Stützwand 53 ist als Luftkissenstützwand ausgebildet, welche eine Vielzahl von Luftkanälen 57 enthält. Die Luftkanäle 57 münden in die Stützfläche 54, vgl. Figuren 8 bis 10. Ein erster Kanalabschnitt 571 des Luftkanals 57 wird durch ein von hinten in die Stützwand 53 gebohrtes Sackloch gebildet. Ein Endkanalabschnitt 572 des Luftkanals 57 steht mit dem Kanalabschnitt 571 in Verbindung und verläuft in einen Winkel W schräg zur Stützfläche 54. Der Winkel W beträgt 30°. Der Endkanalabschnitt 572 hat einen Durchmesser von 3 mm bis 6 mm, insbesondere von 4 mm. Bei Beaufschlagung des Luftkanals 57 mit Überdruck tritt somit ein Luftstrom schräg zur Stützfläche 54 aus. Um den aus der Stützfläche 54 austretenden Luftstrom nicht zu behindern enthält der Gummibelag 56 ein ovales Loch 561, welches den Endkanalabschnitt 572 umgibt. Der Luftkanal 57 erstreckt sich somit als Durchgangskanal durch die Stützwand 53 hindurch bis auf eine der Stützfläche 54 gegenüberliegende Seite der Stützwand 53.

Die zweite Pressplatte 52 ist parallel zu der ersten Pressplatte 51 und zu der Stützfläche 54 angeordnet. Die Pressplatte 52 kann quer zur Förderrichtung des Waagerechtförderers 50 linear verschoben werden, sodass sich der Abstand zwischen den beiden Pressplatten 51 und 52 verändert. Die Pressplatte 52 enthält eine Ansaugeinrichtung (nicht dargestellt), mit welcher eine sich an der Pressplatte 51 abstützende Glastafel angesaugt werden kann. Die Pressplatte 52 kann anschließend mit der daran angesaugten Glastafel von der Pressplatte 51 wegbewegt werden.

Das Dünnglas T2 wird an die Pressplatte 52 angesaugt und mit dieser von der Pressplatte 51 wegbewegt. Dies wird nachstehend noch im Detail erläutert. Nach dem Applizieren des Abstandhalterstrangs 16 auf das Außenglas S2, wird dieses in die Zwischenstation 32 gefördert. Das Dünnglas T1 und das Außenglas S1 werden dem Außenglas S2 hinterhertransportiert, vgl. Zwischenschritt B in Figur 1. Der Waagerechtförderer 50 wird frei, wenn das an die Pressplatte 52 angesaugte Dünnglas T2 von der Pressplatte 51 wegbewegt ist. Dann kann das Außenglas S2 mit dem Waagerechtförderer 50 in die Pressstation 5 hineingefördert werden, bis es deckungsgleich zu dem Dünnglas T2 steht. Anschließend wird die Pressplatte 52 mit dem daran angesaugten Dünnglas T2 wieder in Richtung zur Pressplatte 51 bewegt bis das Dünnglas T2 auf dem Abstandhalterstrang 16 aufliegt und einen vordefinierten Abstand zu dem Außenglas S2 aufweist. Bevor das Dünnglas T2 vollständig auf dem Abstandhalterstrang 16 aufliegt, kann der Zwischenraum zwischen dem Dünnglas T2 und dem Außenglas S2 in an sich bekannter Weise mit einem von Luft verschiedenen Gas gefüllt werden. Das zweite Dünnglas T2 und das zweite Außenglas S2 sind dann zu einer Glasbaugruppe U2 zusammengefügt, die als "zweite Glasbaugruppe" bezeichnet wird. Das Dünnglas T1 wird in die Zwischenstation 32 transportiert. Das Außenglas S1 wird in die Auftragestation 4 hineingefördert und der Abstandhalterstrang 14 wird auf das Außenglas S1 aufgetragen, vgl. Zwischenschritt C in Figur 1.

Der Abstand zwischen den Pressplatten 51 und 52 wird wieder vergrößert und die zweite Glasbaugruppe U2 wird über die Zwischenstation 33 in die Wendestation 6 gefördert. Gleichzeitig wird das Dünnglas T1 in die Pressstation 5 hineingefördert, vgl. Zwischenschritt D in Figur 1.

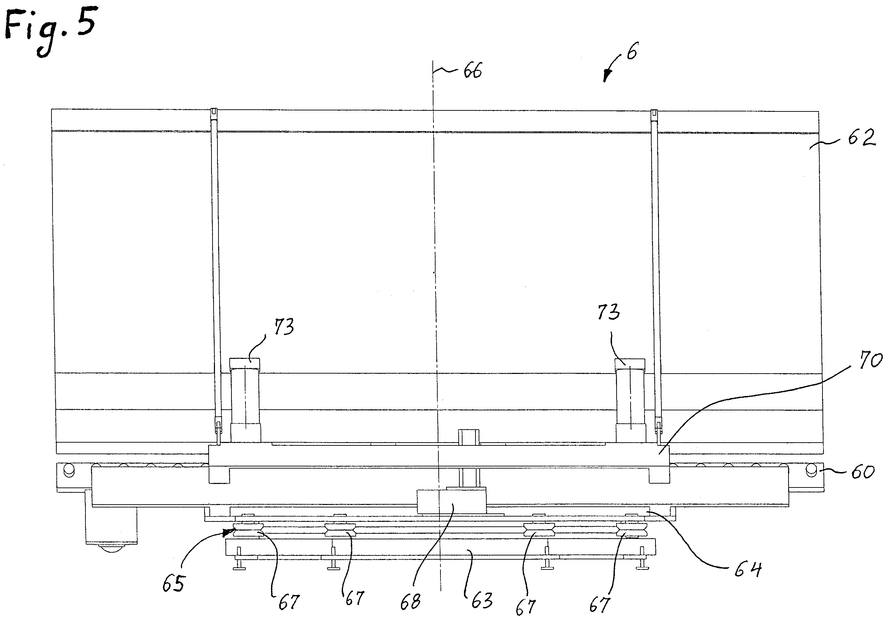

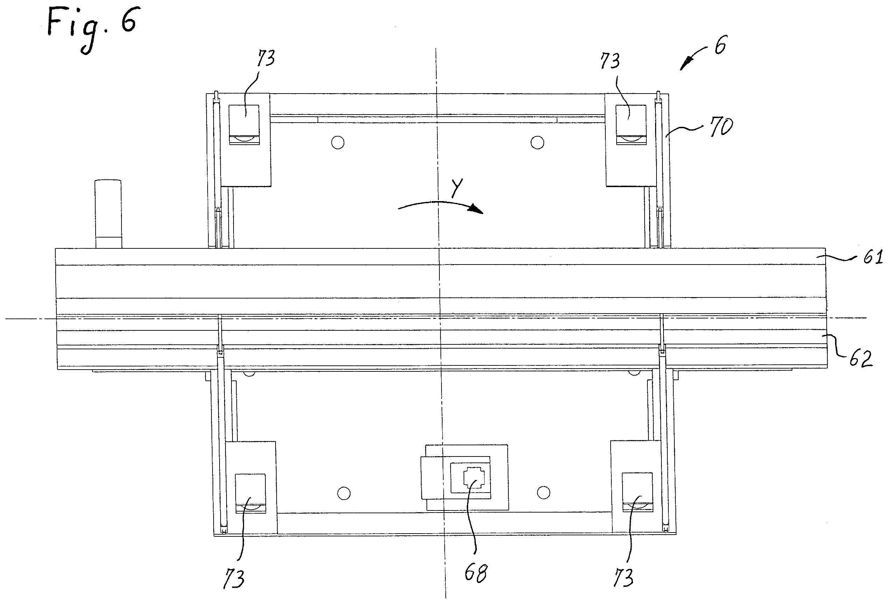

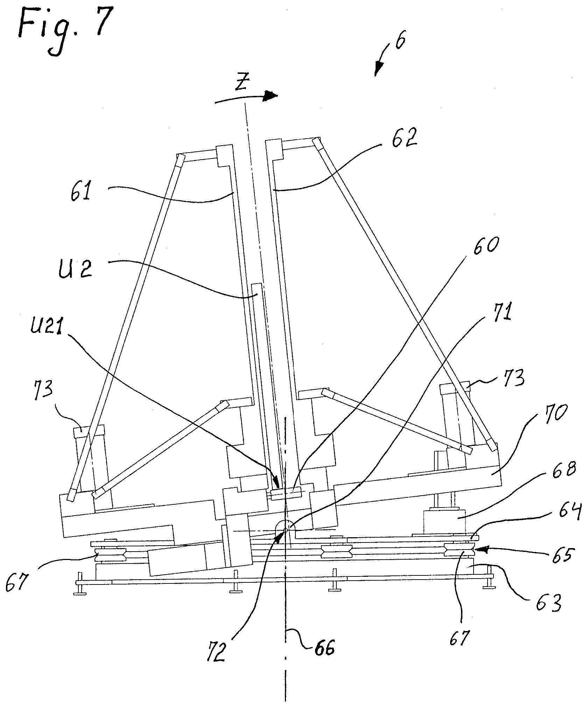

Die Wendestation 6 hat einen einspurigen Waagerechtförderer 60, eine erste Stützwand 61 und eine zweite Stützwand 62, vgl. Figuren 5 bis 7. Der Waagerechtförderer 60 ist in an sich bekannter Weise ausgebildet. Ferner hat die Wendestation 6 ein ortsfest auf dem Fußboden stehendes Untergestell 63, an welchem ein Drehrahmen 64 angebracht ist. Zwischen dem Drehrahmen 64 und dem Untergestell 63 ist ein Drehgelenk 65 mit einer vertikal stehenden Drehachse 66 angeordnet. Das Drehgelenk 65 ist als Drehkranz mit mehreren entlang des Umfangs angeordneten Führungsrollen 67 ausgebildet. Die Wendestation 6 enthält einen Drehantrieb 68, mit welchen der Drehrahmen 64 in Richtung des Pfeiles Y um die Drehachse 66 gedreht werden kann. An dem Drehrahmen 6 ist ein Kipprahmen 70 angebracht. Zwischen dem Drehrahmen 64 und dem Kipprahmen 70 ist ein Kippgelenk 71 mit einer horizontalen Kippachse 72 angeordnet. Die Kippachse 72 verläuft in Figur 7 senkrecht zur Zeichenebene. Kippantriebe 73 in Form von Druckmittelzylindern sind vorgesehen, um den Kipprahmen 70 relativ zum Drehrahmen 64 in Richtung des Pfeiles Z um die Kippachse 72 zu kippen.

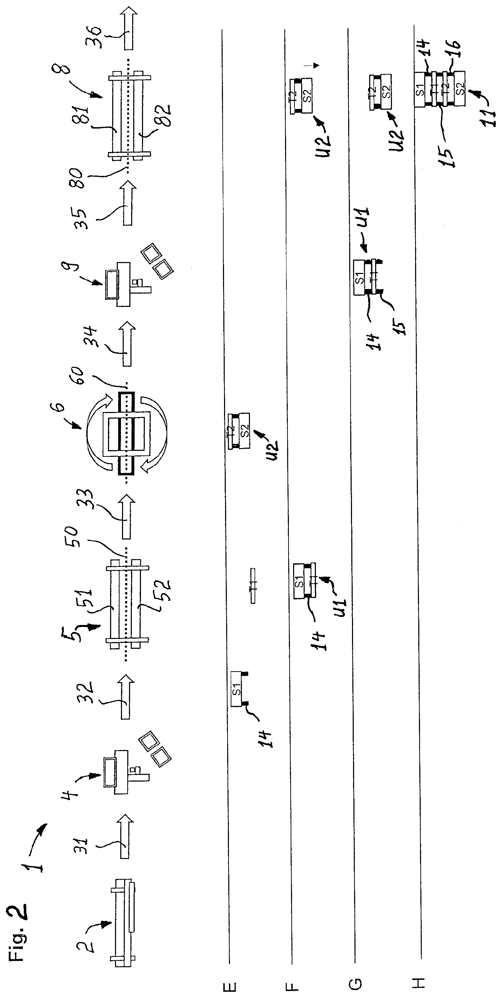

Wenn die Glasbaugruppe U2 auf ihrer Unterkante U21 stehend von der Pressstation 5 in die Wendestation 6 gefördert wird, stützt sich die Glasbaugruppe U2 an der Außenseite S22 der Glastafel S2 ab. Die Waagerechtförderer 50 und 60 stehen in einer Linie und die Stützwand 61 steht in einer Ebene mit der Pressplatte 51, wenn die Glasbaugruppe U2 in die Wendestation 6 hineingefördert wird. Anschließend wird die Glasbaugruppe U2 über den Drehantrieb 68 in Richtung des Pfeiles Y um 180° gedreht und dadurch gewendet. Gleichzeitig mit der Drehbewegung in Richtung des Pfeiles Y wird die die Glasbaugruppe U2 über die Kippantriebe 73 in Richtung des Pfeiles Z gekippt. Beim Kippen des Waagerechtförderers 60 zusammen mit den Stützwänden 61 und 62 kippt auch die Glasbaugruppe U2 von der Stützwand 61 weg und hin zu der Stützwand 62. Nach Beendigung des Kippvorgangs stützt sich die Glasbaugruppe U2 mit dem Dünnglas T2 an der Stützwand 62 ab. Nach Beendigung des Dreh- und Kippvorgangs fluchtet der Waagerechtförderer 60 wieder mit dem Waagerechtförderer 50 und die Stützwand 62 steht in einer Ebene mit der Pressplatte 51, vgl. Zwischenschritt E in Figur 2. Während des Wendevorgangs wird das Dünnglas T1 an die Pressplatte 52 angesaugt und mit dieser von der Pressplatte 51 wegbewegt.

Nach dem Wenden der Glasbaugruppe U2 wird diese an dem Dünnglas 11 abgestützt und in die zweite Pressstation 8 gefördert. Der Waagerechtförderer 50 wird frei, wenn das an die Pressplatte 52 angesaugte Dünnglas T1 von der Pressplatte 51 wegbewegt ist. Dann kann das Außenglas S1 mit dem Waagerechtförderer 50 in die Pressstation 5 hineingefördert werden, bis es deckungsgleich zu dem Dünnglas T1 steht. Anschließend wird die Pressplatte 52 mit dem daran angesaugten Dünnglas T1 wieder in Richtung zur Pressplatte 51 bewegt bis das Dünnglas T1 auf dem Abstandhalterstrang 14 aufliegt und einen vordefinierten Abstand zu dem Außenglas S1 aufweist. Bevor das Dünnglas T1 vollständig auf dem Abstandhalterstrang 14 aufliegt, kann der Zwischenraum zwischen dem Dünnglas T1 und dem Außenglas S1 in an sich bekannter Weise mit einem von Luft verschiedenen Gas gefüllt werden, um die Isolationswirkung zu erhöhen. Das erste Dünnglas T1 und das erste Außenglas S1 sind dann zu einer Glasbaugruppe U1 zusammengefügt, die auch als "erste Glasbaugruppe" bezeichnet wird, vgl. Zwischenschritt F in Figur 2.

Die erste Glasbaugruppe U1 wird aus der Pressstation 5 über die Zwischenstation 33 stehend ohne Wenden durch die Wendestation 6 hindurchgefördert. Dabei wird die Glasbaugruppe U1 an der Außenseite S12 von der Stützwand 62 abgestützt. Über die Zwischenstation 35 wird die Glasbaugruppe U1 in die zweite Auftragestation 9 hineingefördert. In der zweiten Auftragestation 9 wird der zweite Abstandhalterstrang 15 auf das erste Dünnglas T1 aufgetragen, sodass in an sich bekannter Weise ein geschlossener Abstandhalterrahmen entlang des Randes des Dünnglases T1 gebildet wird, vgl. Zwischenschritt G in Figur 2.

Die zweite Pressstation 8 hat einen einspurigen Waagerechtförderer 80, eine erste Pressplatte 81 und eine zweite Pressplatte 82. Die erste Pressplatte 81 ist ortsfest angeordnet und gegenüber der Vertikalen leicht nach hinten geneigt. Die Pressplatte 81 stützt die auf dem Waagerechtförderer 80 stehende Glasbaugruppe U2 ab, sodass diese nicht nach vorne, d. h. zu der der Pressplatte 81 abgewandten Seite, umkippt. Die Pressplatte 81 bildet eine Luftkissenstützwand mit einer ebenen Stützfläche, welche in einer Ebene mit der Stützfläche 54 der Pressplatte 51 angeordnet ist. Die zweite Pressplatte 82 ist parallel zu der Pressplatte 81 angeordnet und kann quer zur Förderrichtung des Waagerechtförderer 80 linear verschoben werden, sodass sich der Abstand zwischen den beiden Pressplatten 81 und 82 verändert. Die Pressplatte 82 enthält eine an sich bekannte Ansaugeinrichtung (nicht dargestellt), mit welcher eine sich an der Pressplatte 81 abstützende Glasbaugruppe U2 angesaugt werden kann. Die Glasbaugruppe U2 wird am Außenglas S2 an die Pressplatte 82 angesaugt. Die Pressplatte 82 wird anschließend mit der daran angesaugten Glasbaugruppe U2 von der Pressplatte 81 wegbewegt. Dadurch wird der Waagerechtförderer 80 frei, vgl. Zwischenschritt G in Figur 2.

Über die Zwischenstation 35 wird die Glasbaugruppe U1 von dem Waagerechtförderer 80 in die Pressstation 8 hineingefördert. Wenn das Außenglas S1 deckungsgleich zu dem Außenglas S2 steht, wird die Pressplatte 82 mit der daran angesaugten Glasbaugruppe U2 wieder in Richtung zur Pressplatte 81 bewegt. Der Abstand zwischen den beiden Pressplatten 81 und 82 wird soweit verringert, bis das Dünnglas T2 auf dem Abstandhalterstrang 15 aufliegt und das erste Außenglas S1 einen vordefinierten Abstand zu dem zweiten Außenglas S2 aufweist, vgl. Zwischenschritt H in Figur 2. Bevor das Dünnglas T2 vollständig auf dem Abstandhalterstrang 15 aufliegt, kann der Zwischenraum zwischen dem Dünnglas T2 und dem Dünnglas T1 in an sich bekannter Weise mit einem von Luft verschiedenen Gas gefüllt werden.

Das Ansaugen des Außenglases S2 an die Pressplatte 82 wird beendet und der Abstand zwischen den Pressplatten 81 und 82 wird wieder vergrößert. Dann wird die zusammengebaute Vierfach-Isolierglasscheibe 11 über den Waagerechtförderer 80 und die Zwischenstation 36 abtransportiert. Dabei wird die stehende Isolierglasscheibe 11 an der Außenseite S12 abgestützt.

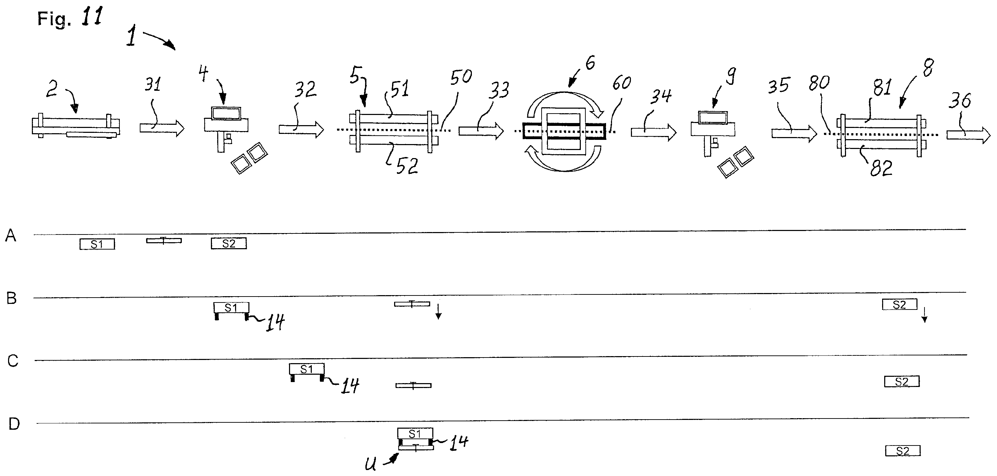

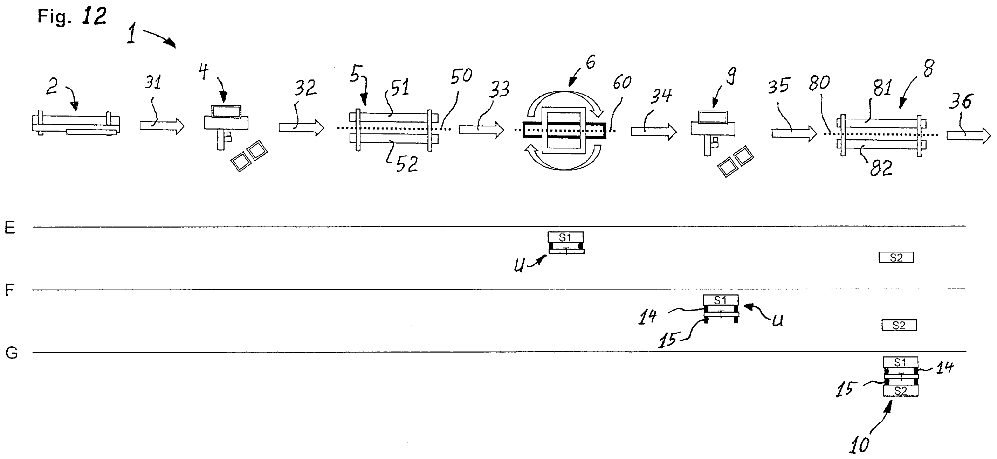

Bei einem Ausführungsbeispiel der erfindungsgemäßen Herstellung der Dreifach-Isolierglasscheibe 10 wird dieselbe Vorrichtung 1 wie bei der vorstehend beschriebenen Herstellung der Vierfach-Isolierglasscheibe 11 eingesetzt. Das zweite Außenglas S2 wird als erste Glastafel zugeführt. Anschließend wird das Dünnglas T als zweite Glastafel zugeführt. Als dritte Glastafel wird das erste Außenglas S1 zugeführt, vgl. Zwischenschritt A in Figur 11. Nach einer Kontrolle der jeweiligen Glastafel in der Visitierstation 2 wird das Außenglas S2 ohne Bearbeitung in die Pressstation 8 hineingefördert. Das Dünnglas T wird in die Pressstation 5 hineingefördert. In der Auftragestation 4 wird der erste Abstandhalterstrang 14 auf das Außenglas S1 aufgetragen, vgl. Zwischenschritt B in Figur 11. Das Dünnglas T wird an die Pressplatte 52 angesaugt und mit dieser von der Pressplatte 51 wegbewegt. Das Außenglas S2 wird an die Pressplatte 82 angesaugt und mit dieser von der Pressplatte 81 wegbewegt, vgl. Zwischenschritt C in Figur 11. Anschließend wird das mit dem Abstandhalterstrang 14 versehene Außenglas S1 in die Pressstation 5 hineingefördert und dort mit dem Dünnglas T zu einer Glasbaugruppe U zusammengefügt, vgl. Zwischenschritt D in Figur 11. Das Zusammenfügen geschieht in gleicher Weise, wie es vorstehend für die Glasbaugruppe U1 beschrieben ist. Anschließend wird die Glasbaugruppe U ohne Wenden durch die Wendestation 6 hindurch, vgl. Zwischenschritt E in Figur 12, bis in die zweite Auftragestation 9 gefördert. Dort wird der Abstandhalterstrang 15 auf das Dünnglas T aufgetragen, sodass in an sich bekannter Weise ein geschlossener Abstandhalterrahmen entlang des Randes des Dünnglas T gebildet wird, vgl. Zwischenschritt F in Figur 12. Die Glasbaugruppe U wird in die Pressstation 8 hineingefördert. Die Pressplatte 82 mit dem daran angesaugten Außenglas S2 wird wieder in Richtung zur Pressplatte 81 bewegt bis das Außenglas S2 auf dem Abstandhalterstrang 15 aufliegt, vgl. Zwischenschritt G in Figur 12. Anschließend wird die zusammengebaute Dreifach-Isolierglasscheibe 10 über die Zwischenstation 36 abtransportiert.

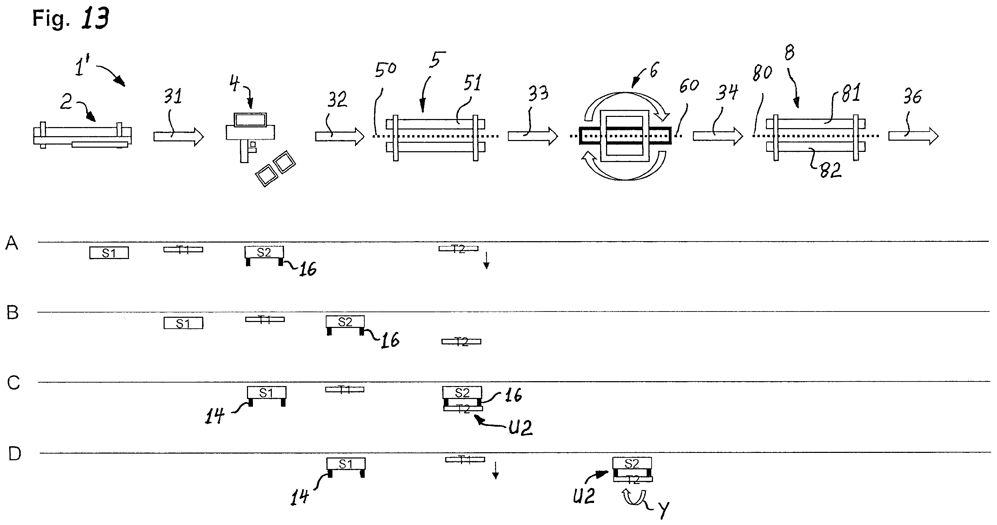

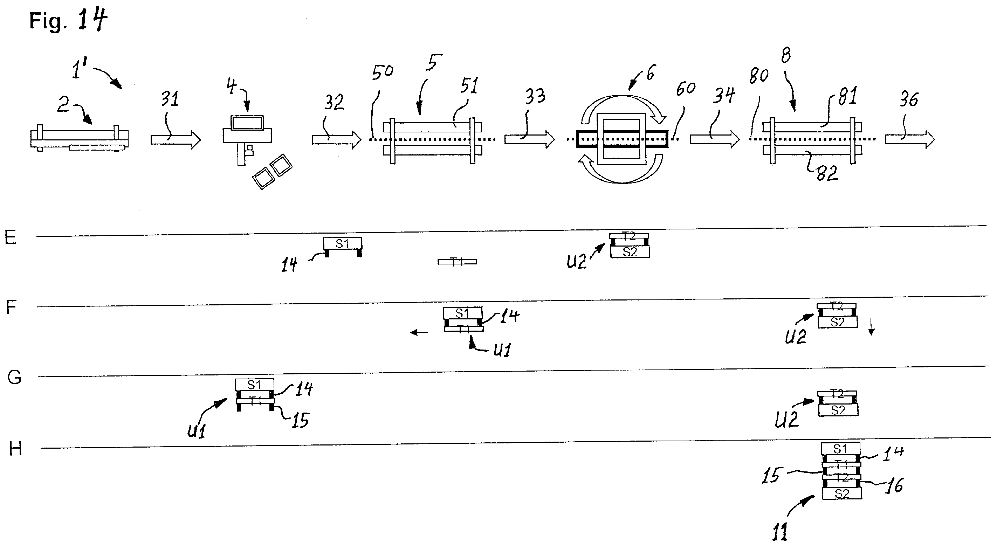

Das Zusammenbauen der Vierfach-Isolierglasscheibe 11 kann alternativ auch mit einer abgewandelten Vorrichtung 1' gemäß den Figuren 13 und 14 durchgeführt werden. Die Vorrichtung 1' enthält im Gegensatz zur vorbeschriebenen Vorrichtung 1 keine zweite Auftragestation 9. Die Herstellung der Glasbaugruppen U1, U2, vgl. Zwischenschritte A bis F der Figuren 13 und 14, erfolgt in gleicher Weise wie es vorstehend in Bezug auf die Zwischenschritte A bis F der Figuren 1 und 2 bereits beschrieben wurde. Anschließend wird die Glasbaugruppe U1 entgegen der Hauptförderrichtung in die Auftragestation 4 zurückgefördert. In der Auftragestation 4 wird der Abstandhalterstrang 15 auf das Dünnglas T1 aufgetragen, sodass in an sich bekannter Weise ein geschlossener Abstandhalterrahmen entlang des Randes des Dünnglases T1 gebildet wird, vgl. Zwischenschritt G in Figur 14. In der Pressstation 8 wird die Glasbaugruppe U2 von der Pressplatte 82 angesaugt und von der Pressplatte 81 wegbewegt. Die mit dem Abstandhalterstrang 15 versehene Glasbaugruppe U1 wird in Hauptförderrichtung durch die Pressstation 5 und die Wendestation 6 hindurch bis in die Pressstation 8 hinein gefördert. Dort wird die Glasbaugruppe U1 in entsprechender Weise mit der Glasbaugruppe U2 zu der Isolierglasscheibe 10 zusammengefügt, vgl. Zwischenschritt H in Figur 14.

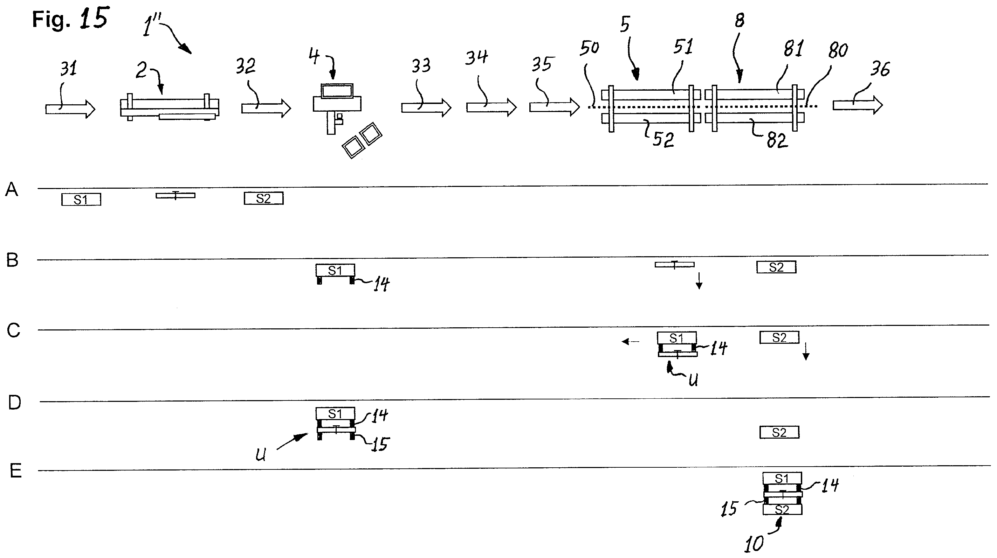

Das Zusammenbauen der Dreifach-Isolierglasscheibe 10 kann alternativ auch mit einer abgewandelten Vorrichtung 1" gemäß Figur 15 durchgeführt werden. Die Vorrichtung 1" unterscheidet sich von der vorbeschriebenen Vorrichtung 1 vor allem dadurch, dass die beiden Pressstationen 5 und 8 unmittelbar hintereinander angeordnet sind. Ferner ist nur eine Auftragestation 4 vorhanden. Die Zuführung der Glastafeln S2, T und S1 sowie die Herstellung der Glasbaugruppe U, vgl. Zwischenschritte A bis C der Figur 15, erfolgt in gleicher Weise wie es vorstehend in Bezug auf die Zwischenschritte A bis D der Figur 11 bereits beschrieben wurde. Anschließend wird die Glasbaugruppe U entgegen der Hauptförderrichtung in die Auftragestation 4 zurückgefördert. In der Auftragestation 4 wird der Abstandhalterstrang 15 auf das Dünnglas T aufgetragen, sodass in an sich bekannter Weise ein geschlossener Abstandhalterrahmen entlang des Randes des Dünnglases T gebildet wird, vgl. Zwischenschritt D in Figur 15. In der Pressstation 8 wird die das Außenglas S2 von der Pressplatte 82 angesaugt und von der Pressplatte 81 wegbewegt. Die mit dem Abstandhalterstrang 15 versehene Glasbaugruppe U wird in Hauptförderrichtung durch die Pressstation 5 hindurch bis in die Pressstation 8 hinein gefördert. Dort wird die Glasbaugruppe U in entsprechender Weise mit dem Außenglas S2 zu der Isolierglasscheibe 10 zusammengefügt, vgl. Zwischenschritt E in Figur 15.

Die Luftkanäle 57 in der Pressplatte 51 sind wahlweise mit Unterdruck oder mit Überdruck beaufschlagbar. Bei Beaufschlagung mit Unterdruck bilden sie Ansaugeinrichtungen 90, um das flexible Dünnglas T, T1 und T2 möglichst eben an die Stützfläche 53 anzusaugen. Eine Ansaugeinrichtung 90 umfasst einen Luftkanal 57, eine kreisförmige Vertiefung 91 sowie mehrere Nuten 92, vgl. Figur 9. Die Vertiefung 91 umgibt den Endkanalabschnitt 572 und steht mit diesem in Verbindung. Die Vertiefung 91 ist zur Stützfläche 54 hin offen und weist einen Durchmesser von 20 mm oder weniger auf. Die Nuten 92 laufen radial auf den Endkanalabschnitt 572 zu und münden in die Vertiefung 91. Eine Nut 92 kann mehrere Nutabschnitte 921 und 922 enthalten. Die beiden Nutabschnitte 921 und 922 verlaufen schräg zueinander. Die Länge L eines geradlinig verlaufenden Nutabschnitts 921, 922 beträgt höchstens 60 mm. Die Breite B der Nut 92 beträgt etwa 8 mm. Die Tiefe T der Vertiefung 91 und der Nut 92 beträgt höchstens 1 mm. Die Vertiefung 91 kann geringfügig tiefer als die Nut 92 sein. Die Stützfläche 54 hat einen ersten Stützbereich 93, in welchem die Luftkanaldichte größer als in einem zweiten Stützbereich 94 ist. Der Luftkissentransport von Dünnglas wird dadurch verbessert. Im ersten Stützbereich 93 ist der von den Luftkanälen 57 von den Luftkanälen 57 mit Unterdruck beaufschlagter Flächenanteil größer als in dem zweiten Stützbereich 94. Eine Ansaugeinrichtung 90 enthält im Stützbereich 93 vier Nuten 92 und im Stützbereich 94 fünf Nuten 92. Im Bereich einer unteren Ecke der Stützwand 53 ist ein dritter Stützbereich 95 angeordnet, in welchem der besaugte Flächenanteil noch größer als in dem Stützbereich 93 ist. Dies wird dadurch erreicht, dass einige Nuten 92 mit mehreren Luftkanälen 57 in Verbindung stehen und sich kreuzen. Die Stützwand 53 hat Löcher 96 zur Aufnahme von Sensoren. Die Ansaugeinrichtungen 90 sparen den Bereich der Löcher 96 aus.

Mit den erfindungsgemäßen Ansaugeinrichtungen 90 wird das Dünnglas T, T1 und T2 in der ersten Pressstation 5 jeweils zunächst an die erste Pressplatte 51 angesaugt. Die Gestaltung der Ansaugeinrichtungen 90 kann gewährleisten, dass das Dünnglas T, T1, T2 besonders eben und ohne Wellen zu bilden an der Stützfläche 54 anliegt. Durch die unterschiedliche starke Ansaugwirkung in den Stützbereichen 93, 94 und 95, legt sich das Dünnglas T, T1, T2 zuerst im Stützbereich 95 an die Stützfläche 54 an. Von dieser Ecke ausgehend legt sich das Dünnglas T, T1, T2 anschließend in den Stützbereichen 93 und 94 an die Stützfläche 54 an. Dieser von einer Ecke des Dünnglases T, T1, T2 ausgehende Anlegevorgang führt zu einer vollflächigen und besonders ebenen Anlage des Dünnglases T, T1, T2 an der Stützfläche 54. Es wird eine Bildung von Luftpolstern zwischen der Stützfläche 54 und dem Dünnglas T, T1, T2 vermieden, welche zu einer Welligkeit des Dünnglases T, T1, T2 führen würde. Die Ansaugung des Dünnglases T, T1, T2 an die erste Pressplatte 51 wird aufrechterhalten, während das jeweilige Dünnglas T, T1, T2 an die zweite Pressplatte 52 angesaugt wird. Erst wenn das jeweilige Dünnglas T, T1, T2 an die zweite Pressplatte 52 angesaugt ist, wird das Ansaugen an die erste Pressplatte 51 beendet. Dadurch kann das Dünnglas T, T1, T2 in sehr ebener Weise an die zweite Pressplatte 52 übergeben und auf den Abstandhalter 14 bzw. 16 aufgesetzt werden, wie vorstehend bereits beschrieben ist. Die Ansaugeinrichtung in der zweiten Pressplatte 52 kann in an sich bekannter Weise ausgestaltet sein oder erfindungsgemäße Ansaugeinrichtungen 90 enthalten.

### Bezugszeichenliste

| | | | |
|---|---|---|---|
| 1, 1', 1" | Vorrichtung | 571 | Kanalabschnitt |
| 10 | Dreifach-Isolierglasscheibe | 572 | Endkanalabschnitt |
| 11 | Vierfach-Isolierglasscheibe | 6 | Wendestation |
| T | Dünnglastafel für 10 | 61 | Stützwand |
| T1 | erste Dünnglastafel für 11 | 62 | Stützwand |
| T2 | zweite Dünnglastafel für 11 | 63 | Untergestell |
| S1 | erste Außenglastafel | 64 | Drehrahmen |
| S11 | Oberfläche/Innenseite | 65 | Drehgelenk |
| S12 | Oberfläche/Außenseite | 66 | Drehachse |
| S2 | zweite Außenglastafel | 67 | Führungsrollen |
| S21 | Oberfläche/Innenseite | 68 | Drehantrieb |
| S22 | Oberfläche/Außenseite | 70 | Kipprahmen |
| U | Glasbaugruppe für 10 | 71 | Kippgelenk |
| U1 | erste Glasbaugruppe für 11 | 72 | Kippachse |
| U2 | zweite Glasbaugruppe für 11 | 73 | Kippantriebe |
| U21 | Unterkante | 8 | Pressstation |
| 14 | erster Abstandhalterstrang | 80 | Waagerechtförderer |
| 15 | zweiter Abstandhalterstrang | 81 | Pressplatte |
| 16 | dritter Abstandhalterstrang | 82 | Pressplatte |
| 2 | Visitierstation | 9 | Auftragestation |
| 31-36 | Zwischenstationen | 90 | Ansaugeinrichtung |
| 4 | Auftragestation | 91 | Vertiefung |
| 5 | Pressstation | 92 | Nut |
| 50 | Waagerechtförderer | 921 | Nutabschnitt |
| 51 | Pressplatte | 922 | Nutabschnitt |
| 52 | Pressplatte | 93 | Stützbereich |
| 53 | Stützwand | 94 | Stützbereich |
| 54 | Stützfläche | 95 | Stützbereich |
| 55 | Vertikale | 96 | Löcher |
| 56 | Gummibelag | | |
| 561 | ovales Loch | | |
| 57 | Luftkanäle | | |

## Patentansprüche

1. Verfahren zum Zusammenbauen einer zwei Außengläser (S1, S2) und wenigstens ein dazwischen liegendes Dünnglas (T; T1, T2) enthaltenden Isolierglasscheibe (10; 11) mit folgenden Schritten:
• ein erster flexibler Abstandhalterstrang (14) wird in einer Auftragestation (4) zur Bildung eines ersten rahmenförmigen Abstandhalters auf ein erstes Außenglas (S1) aufgetragen;
• nach dem Auftragen des ersten Abstandhalterstrangs (14) wird das erste Außenglas (S1) mit einem Dünnglas (T; T1) in einer ersten Pressstation (5) zu einer Glasbaugruppe (U; U1) zusammengefügt, wobei die erste Pressstation (5) der Auftragestation (4) nachgeordnet ist;
• nach dem Zusammenfügen der Glasbaugruppe (U; U1) wird ein zweiter flexibler Abstandhalterstrang (15) zur Bildung eines rahmenförmigen Abstandhalters auf das Dünnglas (T; T1) der Glasbaugruppe (U; U1) aufgetragen;
• nach dem Auftragen des zweiten Abstandhalterstrangs (15) wird die Glasbaugruppe (U; U1) in einer zweiten Pressstation (8) wenigstens mit einem zweiten Außenglas (S2) zu einer Dreifach- oder Vierfach-Isolierglasscheibe (10; 11) vervollständigt, wobei die zweite Pressstation (8) der ersten Pressstation (5) nachgeordnet ist.

2. Verfahren nach Anspruch 1, bei welchem das Dünnglas (T; T1) und das den ersten Abstandhalterstrang (14) aufweisende Außenglas (S1) nacheinander stehend in die erste Pressstation (5) hineingefördert werden, in welcher das Zusammenfügen zu der Glasbaugruppe (U; U1) erfolgt.

3. Verfahren nach Anspruch 2, welches folgende Schritte enthält:
• in der ersten Pressstation (5) wird das sich an einer ersten Pressplatte (51) abstützende Dünnglas (T; T1) an eine zweite Pressplatte (52) angesaugt;
• die zweite Pressplatte (52) mit dem daran angesaugten Dünnglas (T; T1) wird von der ersten Pressplatte (51) wegbewegt;
• nach dem Wegbewegen des Dünnglases (T; T1) von der ersten Pressplatte (51) wird das erste Außenglas (S1) in die erste Pressstation (5) hineingefördert, wobei es sich an der ersten Pressplatte (51) abstützt;
• nach dem Zusammenfügen des Dünnglases (T; T2) mit dem ersten Außenglas (S1) zu der Glasbaugruppe (U; U1) wird das Ansaugen des Dünnglases (T; T1) an die zweite Pressplatte (52) beendet.

4. Verfahren nach Anspruch 3, welches folgende Schritte enthält:
• in der ersten Pressstation (5) wird das sich an der ersten Pressplatte (51) abstützende Dünnglas (T; T1) zunächst an die erste Pressplatte (51) angesaugt;
• das Dünnglas (T; T1) wird an die zweite Pressplatte (52) angesaugt, bevor das Ansaugen des Dünnglases (T; T1) an die erste Pressplatte (51) beendet wird.

5. Verfahren nach einem der Ansprüche 1 bis 4, welches folgende Schritte enthält:
• vor dem Auftragen des ersten Abstandhalterstrangs (14) auf das erste Außenglas (S1) werden das zweite Außenglas (S2) und das Dünnglas (T) nacheinander stehend durch die Auftragestation (4) hindurch gefördert;
• das zweite Außenglas (S2) wird stehend bis in die zweite Pressstation (8) hinein gefördert;
• das Dünnglas (T) wird stehend bis in die erste Pressstation (5) hinein gefördert;
• nach dem Auftragen des ersten Abstandhalterstrangs (14) wird das erste Außenglas (S1) stehend aus der Auftragestation (4) in die erste Pressstation (5) gefördert;
• in der ersten Pressstation (5) wird das Dünnglas (T) und das erste Außenglas (S1) zu der Glasbaugruppe (U) zusammengefügt;
• nach dem Auftragen des zweiten Abstandhalterstrangs (15) auf das Dünnglas (T) der Glasbaugruppe (U) wird die Glasbaugruppe (U) stehend in die zweite Pressstation (8) hineingefördert;
• in der zweiten Pressstation (8) wird die Glasbaugruppe (U) und das zweite Außenglas (S2) zu einer Dreifach-Isolierglasscheibe (10) zusammengefügt,
• nach dem Zusammenfügen wird die Dreifach-Isolierglasscheibe (10) stehend aus der zweiten Pressstation (8) herausgefördert.

6. Verfahren nach Anspruch 5, welches folgende Schritte enthält:
• in der zweiten Pressstation (8) wird das sich an einer ersten Pressplatte (81) der zweiten Pressstation (8) abstützende zweite Außenglas (S2) an eine zweite Pressplatte (82) der zweiten Pressstation (8) angesaugt;
• die zweite Pressplatte (82) mit dem daran angesaugten zweiten Außenglas (S2) wird von der ersten Pressplatte (81) wegbewegt;
• nach dem Wegbewegen des zweiten Außenglases (S2) von der ersten Pressplatte (81) wird die Glasbaugruppe (U) in die zweite Pressstation (8) hineingefördert, wobei sie sich an der ersten Pressplatte (81) der zweiten Pressstation (8) abstützt,
• nach dem Zusammenfügen des zweiten Außenglases (S2) mit der Glasbaugruppe (U) wird das Ansaugen des zweiten Außenglases (S2) an die zweite Pressplatte (82) der zweiten Pressstation (8) beendet;
• nach dem Beenden des Ansaugens des zweiten Außenglases (S2) an die zweite Pressplatte (82) wird die Dreifach-Isolierglasscheibe (10) aus der zweiten Pressstation (8) herausgefördert.

7. Verfahren nach Anspruch 5 oder 6, welches mit einer ersten Auftragestation (4) und einer zweiten Auftragestation (9) durchgeführt wird,
wobei die erste Pressstation (5) der ersten Auftragestation (4) nachgeordnet ist und die zweite Auftragestation (9) zwischen der ersten Pressstation (5) und der zweiten Pressstation (8), insbesondere zwischen der Wendestation (6) und der zweiten Pressstation (8), angeordnet ist,
wobei das Auftragen des ersten Abstandhalterstrangs (14) auf das erste Außenglas (S1) in der ersten Auftragestation (4) erfolgt,
und wobei die Glasbaugruppe (U) zum Auftragen des zweiten Abstandhalterstrangs (15) auf das Dünnglas (T) der Glasbaugruppe (U) in die zweite Auftragestation (9) hineingefördert wird.

8. Verfahren nach einem der Ansprüche 1 bis 4, welches folgende Schritte enthält:
• ein dritter flexibler Abstandhalterstrang (16) wird zur Bildung eines dritten rahmenförmigen Abstandhalters auf das zweite Außenglas (S2) aufgetragen;
• nach dem Auftragen des dritten Abstandhalterstrangs (16) wird das zweite Außenglas (S2) mit einem zweiten Dünnglas (T2) zu einer zweiten Glasbaugruppe (U2) zusammengefügt;
• nach dem Zusammenfügen der zweiten Glasbaugruppe (U2) und nach dem Auftragen des zweiten Abstandhalterstrangs (15) auf die das erste Außenglas (S1) enthaltende erste Glasbaugruppe (U1) wird die erste Glasbaugruppe (U1) mit der zweiten Glasbaugruppe (U2) zu einer Vierfach-Isolierglasscheibe (11) zusammengefügt.

9. Verfahren nach Anspruch 8, welches folgende Schritte enthält:
• vor dem Auftragen des ersten Abstandhalterstrangs (14) und vor dem Auftragen des dritten Abstandhalterstrangs (16) wird das zweite Dünnglas (T2) stehend durch die Auftragestation (4) hindurch bis in die erste Pressstation (5) hinein gefördert;
• dem zweiten Dünnglas (T2) nachfolgend wird das zweite Außenglas (S2) stehend in die Auftragestation (4) hineingefördert;
• in der Auftragestation (4) wird der dritte flexible Abstandhalterstrang (16) auf das zweite Außenglas (S2) aufgetragen;
• nach dem Auftragen des dritten Abstandhalterstrangs (16) wird das zweite Außenglas (12) stehend aus der Auftragestation (4) in die erste Pressstation (5) gefördert;
• in der ersten Pressstation (5) wird das zweite Dünnglas (T2) und das zweite Außenglas (S2) zu der zweiten Glasbaugruppe (U2) zusammengefügt;
• dem zweiten Außenglas (S2) nachfolgend wird das erste Dünnglas (T1) durch die Auftragestation (4) hindurch gefördert;
• dem ersten Dünnglas (T1) nachfolgend wird das erste Außenglas (S1) stehend in die Auftragestation (4) hineingefördert;
• in der Auftragestation (4) wird der erste flexible Abstandhalterstrang (14) auf das erste Außenglas (S1) aufgetragen,
• nach dem Zusammenfügen der zweiten Glasbaugruppe (U2) wird diese stehend aus der ersten Pressstation (5) in eine Wendestation (6) gefördert und dort um eine aufrecht stehende Drehachse (66) gewendet;
• der zweiten Glasbaugruppe (U2) nachfolgend wird das erste Dünnglas (T1) stehend in die erste Pressstation (5) hineingefördert;
• nach dem Wenden wird die zweite Glasbaugruppe (U2) stehend aus der Wendestation (6) in die zweite Pressstation (8) gefördert;
• nach dem Auftragen des ersten Abstandhalterstrangs (14) auf das erste Außenglas (S1) wird dieses stehend aus der Auftragestation (4) in die erste Pressstation (5) gefördert;
• in der ersten Pressstation (5) wird das erste Dünnglas (T1) und das erste Außenglas (S1) zu der ersten Glasbaugruppe (U1) zusammengefügt;
• nach dem Zusammenfügen der ersten Glasbaugruppe (U1) wird der zweite flexible Abstandhalterstrang (15) auf das erste Dünnglas (T1) der ersten Glasbaugruppe (U1) aufgetragen;
• nach dem Auftragen des zweiten Abstandhalterstrangs (15) auf das erste Dünnglas (T1) der ersten Glasbaugruppe (U1) wird die erste Glasbaugruppe (U1) stehend in die zweite Pressstation (8) hineingefördert;
• in der zweiten Pressstation (8) wird die erste Glasbaugruppe (U1) und die zweite Glasbaugruppe (U2) zu einer Vierfach-Isolierglasscheibe (11) zusammengefügt;
• nach dem Zusammenfügen wird die Vierfach-Isolierglasscheibe (11) stehend aus der zweiten Pressstation (8) herausgefördert.

10. Verfahren nach Anspruch 8 oder 9, welches mit einer ersten Auftragestation (4) und einer zweiten Auftragestation (9) durchgeführt wird,
wobei die erste Pressstation (5) der ersten Auftragestation (4) nachgeordnet ist und die zweite Auftragestation (9) zwischen der ersten Pressstation (5) und der zweiten Pressstation (8), insbesondere zwischen der Wendestation (6) und der zweiten Pressstation (8), angeordnet ist,
wobei das Auftragen des ersten Abstandhalterstrangs (14) auf das erste Außenglas (S1) und das Auftragen des dritten Abstandhalterstrangs (16) auf das zweite Außenglas (S2) in der ersten Auftragestation (4) durchgeführt werden;
und wobei die erste Glasbaugruppe (U1) zum Auftragen des zweiten Abstandhalterstrangs (15) auf das erste Dünnglas (T1) der ersten Glasbaugruppe (U1) in die zweite Auftragestation (9) hineingefördert wird.

11. Verfahren nach einem der Ansprüche 8 bis 10, welches folgende Schritte enthält:
• in der zweiten Pressstation (8) wird das zweite Außenglas (S2) der sich an der ersten Pressplatte (81) abstützenden zweiten Glasbaugruppe (U2) an eine zweite Pressplatte (82) angesaugt;
• die zweite Pressplatte (82) mit der daran angesaugten zweiten Glasbaugruppe (U2) wird von der ersten Pressplatte (81) wegbewegt;
• nach dem Wegbewegen der zweiten Glasbaugruppe (U2) wird die erste Glasbaugruppe (U1) in die zweite Pressstation (8) hineingefördert, wobei sie sich an der ersten Pressplatte (81) abstützt;
• nach dem Zusammenfügen der ersten Glasbaugruppe (U1) mit der zweiten Glasbaugruppe (U2) wird das Ansaugen des zweiten Außenglases (S2) an die zweite Pressplatte (82) beendet.
• nach dem Beenden des Ansaugens des zweiten Außenglases (S2) an die zweite Pressplatte (82) erfolgt das Herausfördern der Vierfach-Isolierglasscheibe (11) aus der zweiten Pressstation (8).

12. Verfahren nach einem der vorstehenden Ansprüche, bei welchem zumindest eine der Stationen (2, 31, 32, 33, 34, 35, 36, 4, 5, 6, 8, 9), insbesondere die erste Pressstation (5), eine Luftkissenstützwand (53) mit einer ebenen Stützfläche (54) aufweist, wobei eine Vielzahl von Luftkanälen (57) in die Stützfläche (54) mündet, aus welchen bei Beaufschlagung mit Überdruck ein Luftstrom schräg zur Stützfläche (54) austritt.

13. Verfahren nach Anspruch 12, in welcher die Stützfläche (54) einen ersten Stützbereich (93) und einen zweiten Stützbereich (94) aufweist, wobei eine Luftkanaldichte in dem ersten Stützbereich (93) größer als in dem zweiten Stützbereich (94) ist, und wobei die Luftkanaldichte als Anzahl von Luftkanälen (57) pro Quadratmeter Stützfläche (54) definiert ist.

14. Verfahren nach einem der Ansprüche 3 bis 13, in welcher zumindest eine der Pressplatten (51, 52, 81, 82), insbesondere die erste Pressplatte (51) der ersten Pressstation (5), eine ebene Stützfläche (54) aufweist, in welche eine Vielzahl von Luftkanälen (57) mündet, wobei die Luftkanäle (57) bei Beaufschlagung mit Unterdruck Ansaugeinrichtungen (90) bilden, um ein Dünnglas (T; T1; T2) eben an die Stützfläche (54) anzusaugen.
